Europäisches Patentamt

European Patent Office

Office européen des brevets

(19)

(11) **EP 0 544 919 B1**

(12) **EUROPEAN PATENT SPECIFICATION**

(45) Date of publication and mention
of the grant of the patent:
**09.09.1998 Bulletin 1998/37**

(21) Application number: **92912818.9**

(22) Date of filing: **24.06.1992**

(51) Int Cl.[6]: **C08F 10/00**, C08F 4/654

(86) International application number:
**PCT/JP92/00806**

(87) International publication number:
**WO 93/00371 (07.01.1993 Gazette 1993/02)**

(54) **PROCESS FOR PRODUCING POLYOLEFINS**

HERSTELLUNGPROZESS FÜR POLYOLEFINE

PROCEDE DE PRODUCTION DE POLYOLEFINES

(84) Designated Contracting States:
**BE DE ES FR GB IT NL SE**

(30) Priority: **25.06.1991 JP 179052/91**

(43) Date of publication of application:
**09.06.1993 Bulletin 1993/23**

(60) Divisional application: **97121622.1 / 0 838 479**

(73) Proprietor: **IDEMITSU PETROCHEMICAL CO. LTD.**
**Tokyo 100 (JP)**

(72) Inventors:
- **OTA, Tsuyoshi, Idemitsu Petrochemical Co., Ltd.**
  **Ichihara-shi, Chiba-ken 299-01 (JP)**
- **AKIMARU, Tsutomu,**
  **Idemitsu Petrochemical Co., Ltd.**
  **Ichihara-shi, Chiba-ken 299-01 (JP)**
- **FUNABASHI, Hideo,**
  **Idemitsu Petrochemical Co., Ltd.**
  **Ichihara-shi, Chiba-ken 299-01 (JP)**
- **SUGAHARA, Akinobu,**
  **Idemitsu Petrochemical Co., Ltd**
  **Ichihara-shi, Chiba-ken 299-01 (JP)**
- **IWASAKI, Sigeo,**
  **Idemitsu Petrochemical Co., Ltd.**
  **Ichihara-shi, Chiba-ken 299-01 (JP)**
- **MATSUO, Youichi,**
  **Idemitsu Petrochemical Co., Ltd.**
  **Ichihara-shi, Chiba-ken 299-01 (JP)**

(74) Representative: **Hoeger, Stellrecht & Partner**
**Uhlandstrasse 14 c**
**70182 Stuttgart (DE)**

(56) References cited:
**EP-A- 0 419 116**     **EP-A- 0 455 813**
**EP-A- 0 461 268**     **JP-A- 3 074 341**
**JP-A-63 054 404**

## Description

<u>Technical Field</u>

The present invention relates to a process for producing polyolefins using the Ziegler type catalyst comprising a specific metallic magnesium compound as a carrier material.

<u>Related Art</u>

The olefin polymerization catalysts generally called Ziegler type catalysts are generally composed of a transition metal compound component and an organometallic compound component. In the preparation of the former transition metal compound component of the above two components, a technique to use magnesium chloride or magnesium alkoxide as a carrier material, has been heretofore widely used. There are extremely large number of the related techniques in this field.

More specifically, in the case of olefin polymerization using this Ziegler type catalyst, slurry polymerization, solution polymerization, gas phase polymerization and the like are used for homopolymerization or copolymerization of ethylene. Of these, gas phase polymerization wherein polymerization is carried out substantially in the absence of liquid phase, is advantageous for ethylene polymerization since it does not require a large amount of solvent, leading to simplification of the process and cost effectiveness. Thus, the gas phase polymerization has been recently studied in ethylene polymerization using the Ziegler type catalyst.

However, in the case of using these magnesium compounds as a carrier material for a polymerization catalyst for olefins such as ethylene, it is necessary to use magnesium compounds having optimized particle size in order to improve catalyst activity and to control particle size of the resultant polymers. In this case, to control particle size, the magnesium compounds themselves are ground, or non-ground magnesium compounds are co-ground with esters when treated with the esters. In any case, a mechanical grinding, classification or the like is required.

When a carrier material which has not been subjected to such grinding treatment, is used, the resultant catalysts have poor polymerization activity and the yield of productivity per unit catalyst is decreased due to a small amount of transition metal (e.g., titanium) carried on a carrier. This causes a problem in that a large amount of chlorine may remain in the resultant polymers. Further, there may be a problem in that the resultant polymers may have undesirable shape and undesirable particle size distribution. Also, a trouble (e.g., clogging of transfer lines due to a large amount of micro-powders of the polymer generated) may occur during the process step of producing polyolefins such as an ethylene polymer.

Accordingly, the grinding step for the magnesium compounds is considered quite important. However, the mechanical grinding step requires lots of labor and cost even when only its condition determination is considered (e.g., a grinding system such as wet type or dry type, grinding equipment, grinding strength, grinding time, which affect the shape of the ground products).

Further, in order to improve the morphology of the resultant polymers such as particle size and shape, several methods are known. Such methods include a method using a magnesium carried on an inorganic oxide such as silica (Japanese Patent Application Unexamined Publication Nos. Sho 55-120,608; and 58-277,055); and a method using a product obtained by once dissolving a magnesium compound in a solvent such as alcohol and then again precipitating it (JP Pat. Appln. Unexamined Pub. No. 56-000,811). In these methods, the grinding step is not required. However, these methods require carrier treatment or dissolution/precipitation treatment resulting in extremely complicated steps and may give rise to poor stability of the catalyst performance.

Accordingly, it is desired to provide a method of controlling particle size, particle size distribution and shape of a carrier useful for an olefin polymerization catalyst, without using complicated procedures such as mechanical grinding and classification.

Further, as mentioned above, in particular, in the homopolymerization or copolymerization of ethylene using the Ziegler type catalyst, the gas phase polymerization wherein polymerization is carried out substantially in the absence of liquid phase, i.e., under gas phase conditions, has been recently studied. In the gas phase polymerization, controlling of shape of the resultant polymer particles is important technical factor to prevent adhesion of the polymer particles to an inner wall of a reactor and clogging of transfer lines due to enlarged or agglomerated polymer particles, to stabilize the gas phase polymerization reaction.

On the other hand, pre-polymerization wherein a catalyst component is preliminarily treated with a small amount of olefin, has been attempted to keep the shape (particle size, particle size distribution) of the polymer particles at good level. For example, in Japanese Patent Application Publication No. Sho 55-029,512, it is proposed that a solid catalyst is preliminarily contacted with 1 to 500 grams of alpha-olefin per 1 gram of the catalyst. This technique show certain advantages.

However, in this process, when hydrogen is used as molecular weight controlling agent, there is a problem in that generation of micro-powders is increased.

For this reason, in the gas phase polymerization of ethylene, it is heretofore desired to provide a method capable of restricting generation of micro-powders even when hydrogen is used as molecular weight controlling agent, as well as capable of controlling particle size, particle size distribution and shape of a carrier useful for a polymerization catalyst, without using complicated procedures such as mechanical grinding and classification. Such method results in improvement of morphology, such as particle size, particle size distribution and shape, of the resultant polymer.

Further, a highly active catalyst has a problem in that when the catalyst as such is introduced into a polymerization reactor and exposed to high temperatures near polymerization temperature, the activity and the stereo-regularity of the resultant polymer become insufficient, and the catalyst is adhered to the reactor wall.

As a method of solving the above problems, a catalyst is subjected to polymerization treatment with a small amount of alpha-olefin. This is so called pre-polymerization. This pre-polymerization is usually performed in the slurry state with a diluting solvent in a stirring vessel.

However, if the amount of treatment for the pre-polymerization is increased, there is a problem in that the volume of the stirring vessel should be drastically increased, leading to poor cost performance of facilities. In addition, as a method of solving the disadvantages, it is considered to increase the slurry concentration. However, stirring cannot be sufficiently effected for highly concentrated slurry under usual stirring conditions. Thus, the catalyst performance is decreased due to local heat generation, and the activity and the stereo-regularity of the resultant polymer become insufficient. On the other hand, when the slurry concentration is kept at low level, the longer pre-polymerization time is required to obtain a prescribed amount of pre-polymerization, resulting in drastic decrease in activities.

It is desired to provide a method capable of performing pre-polymerization at high slurry concentration.

For this reason, in the production of polyolefins using a solid catalyst component, it is heretofore desired to provide a method capable of performing pre-polymerization at high slurry concentration.

In view of these current situations, the present inventors made intensive studies to produce spherical catalyst carrier materials having controlled particle size and particle size distribution in one step reaction. As a result, it was found that a solid product useful as a catalyst carrier material for olefin polymerization, having narrow particle size distribution, can be obtained by reacting metallic magnesium, alcohol and a specific amount of halogen and/or a halogen-containing compound, without using particle size control treatment such as grinding or classification. It was also found that when olefin polymerization is carried out using an olefin polymerization catalyst component comprising the solid product as a carrier, the catalyst shows a titanium carrying property and polymerization activity which are better or equivalent to those of a conventional catalyst, and the resultant polymers have drastically improved morphology and better or equivalent stereo-regularity to that of a conventional polymer. Further, the present inventors found that the particle size of the resultant solid catalyst can be freely controlled and thus the morphology of the resultant polymers can be freely controlled by appropriately selecting the conditions for the reaction of metallic magnesium, alcohol and a halogen-containing compound.

Further, the present inventors found that the generation of micro-powders of the polymer can be prevented even when hydrogen is used as molecular weight controlling agent by way of a method of preparing a solid catalyst component for ethylene polymerization using, as a carrier, a solid product obtained by the reaction of the above metallic magnesium, alcohol and a specific amount of halogen and/or halogen-containing compound, further subjecting this to pre-polymerization treatment, and then subjecting the solid catalyst component to contact treatment with at least one kind of gas selected from carbon monoxide and carbon dioxide, or a mixed gas of such gas and an inert gas. It was also found that this method is particularly effective in gas phase polymerization.

Further, the present inventors made several studies as to preparation of polymers having improved morphology, particularly pre-polymerization at high slurry concentration. As a result, it was found that effective pre-polymerization treatment can be performed even at high slurry concentration if a specific stirring wing and stirring conditions are used for pre-polymerization treatment using the solid catalyst component (A), when polyolefin is produced using the solid catalyst component (A).

In the meanwhile, the solid products, according to the present invention, obtained by reacting metallic magnesium, alcohol and a specific amount of halogen and/or a halogen-containing compound, are materials different from any magnesium based carrier materials which are previously known. In fact, it is previously known that a small amount of iodine or ethyl orthoformate are added when metallic magnesium and alcohol are reacted (Japanese Patent Examined Publication No. Sho 46-7093, USP 4,412,132). However, in these reactions, iodine or the like is merely used as a reaction initiator and thus the amount is extremely small. On the contrary, it is apparent that the solid products according to the present invention are quite different from those indicated in the prior art since the amount of halogen used in the present invention is much greater than the amount to be used for a reaction initiator.

In other words, it is an object of the present invention to provide a quite new solid catalyst composition useful for olefin polymerization and a process for producing polyolefins.

Further, it is another object of the present invention to provide a process for producing a homopolymer or copolymer of ethylene using this catalyst by gas phase polymerization, and a pre-polymerization method which can be suitably used for this gas phase polymerization method.

Further, it is another object of the present invention to provide a process for producing polyolefins using this solid catalyst composition and the novel pre-polymerization treatment.

Disclosure of the Invention

The present invention provides a process for producing an ethylene polymer characterized by performing homopolymerization of ethylene or copolymerization of ethylene and the other alpha-olefin using at least the following compounds (A) and (B):

(A) a solid catalyst component prepared from at least (a) a solid product obtained by the reaction of metallic magnesium, alcohol and at least 0.0001 gram-atom, per 1 gram-atom of the metallic magnesium, of halogen or a halogen-containing compound containing at least 0.0001 gram-atom, per 1 gram-atom of the metallic magnesium, of a halogen atom, and (b) a titanium compound; and
(B) an organometallic compound,

wherein the solid catalyst component (A) has been contacted with a small amount of olefin to form 0.1 to 100 grams, per 1 gram of the solid catalyst component (A), of an olefin polymer, and then contacted with at least one kind of gas selected from carbon monoxide and carbon dioxide, or a mixed gas of such gas and an inert gas.

In this case, the above-mentioned solid product (a) preferably has a sphericity (S) of smaller than 1.60, more preferably smaller than 1.40 as defined by the following Formula (1):

$$S = (E_1/E_2)^2 \qquad (1)$$

wherein $E_1$ denotes the projected perimeter of a particle, and $E_2$ denotes the perimeter of the circle of equal projected area of a particle, and a particle size distribution index (P) of smaller than 5.0, more preferably smaller than 4.0 as defined by the following Formula (2):

$$P = D_{90}/D_{10} \qquad (2)$$

wherein $D_{90}$ denotes the particle diameter corresponding to a cumulative weight fraction of 90% In other words, the cumulative sum of the weight of particles smaller than the particle diameter defined by $D_{90}$ accounts for 90% of the total weight of all the particles. $D_{10}$ is defined in the same way.

Further, the above solid product (a) may preferably be one which gives an X-ray diffraction spectrum (by Cu-K$\alpha$ line) in which three intense peaks appear within the scattering angle of 5-20°, with the ratio of the peak intensity b/c being greater than 0.4, where peaks are designated as a, b, and c starting from the low scattering angle side.

A preferred embodiment of the invention is given in Claim 2.

The present invention will be described in more detail below.

First, the first invention will be described.

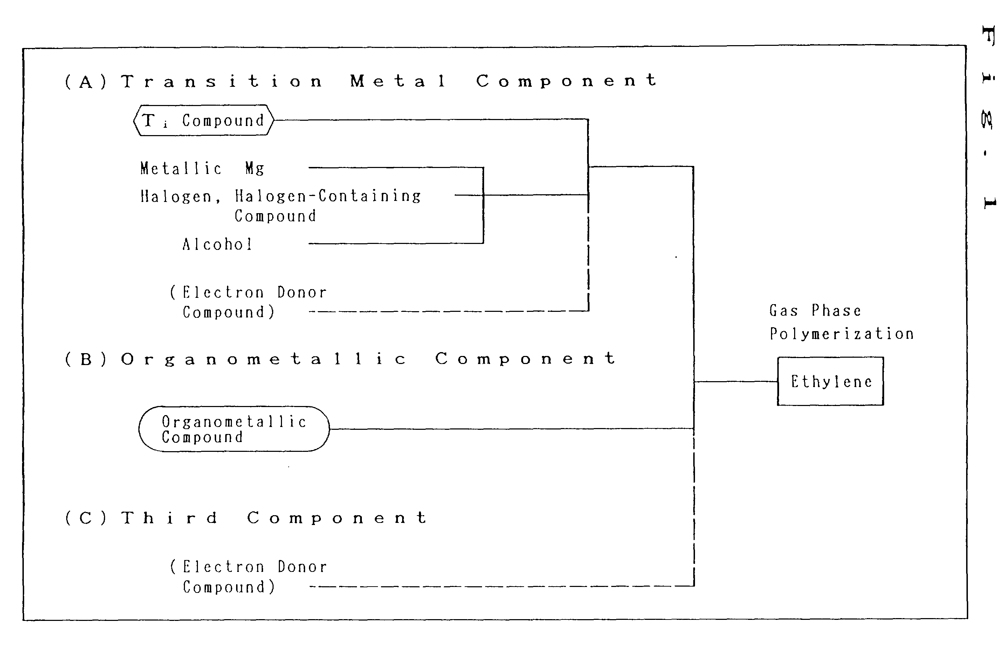

Gas phase polymerization of ethylene alone or gas phase polymerization of ethylene and the other alpha-olefin is performed, as shown in Fig. 1, using at least (A) a solid catalyst component prepared from at least (a) a solid product obtained by the reaction of metallic magnesium, alcohol and halogen or a halogen-containing compound and (b) a titanium compound; and (B) an organometallic compound.

In this case, in the preparation of the above-mentioned solid catalyst component (A), as other component, for example, (c) an electron donor compound can be used if necessary.

Further, in the ethylene polymerization, as other component, for example (C) an electron donor compound can be used if necessary.

In the present invention, the metallic magnesium may be in any form, such as granule, ribbon, and powder. Also, the metallic magnesium may preferably he those free of magnesium oxide film covering the surface, although no specific restrictions are placed on its surface state.

The alcohol is not specifically limited; but it should preferably be a lower alcohol having 1-6 carbon atoms. Ethanol is most desirable, because it gives a solid product which greatly improves the catalyst performance. The alcohol may have any purity and water content is not specifically limited. It is desirable, however, that the water content should be 1% or lower, preferably 2000 ppm or lower, because excess water in the alcohol forms magnesium hydroxide [Mg(OH)$_2$] on the surface of metallic magnesium. Moreover, the water content should preferably be as low as possible,

4

usually 200 ppm or lower, so that the resulting magnesium compound has a good morphology.

The halogens are not particularly limited to but preferably include chlorine, bromine or iodine with iodine being particularly suitable.

The halogen-containing compounds are not particularly limited to, but include those having a halogen atom in the chemical formula. In this case the halogens are not particularly limited to, but include chlorine, bromine and iodine. In addition, among the halogen-containing compounds, halogen-containing metal compounds are particularly desirable.

Examples of the halogen-containing compounds which can preferably used, are $MgCl_2$, $MgI_2$, $Mg(OEt)Cl$, $Mg(OEt)$ I, $MgBr_2$, $CaCl_2$, $NaCl$ and $KBr$. Of these compounds, $MgCl_2$ and $MgI_2$ are particularly desirable.

The halogen-containing compounds may be used in any form and state, and may have any particle size. For example, it may be used in the form of solution in an alcohol type solvent such as ethanol.

The amount of the alcohol is not specifically limited; however, it usually ranges from 2 to 100 moles, preferably from 5 to 50 moles, per 1 mole of the metallic magnesium. Use of an excess amount of alcohol may give a magnesium compound having a good morphology. With too small amount of alcohol, it is difficult to carry out smooth stirring in a reaction vessel. However, the above-mentioned molar ratio is not limitative.

The halogen should be used in an amount of at least 0.0001 gram-atom, preferably at least 0.0005 gram-atom, most preferably at least 0.001 gram-atom, per 1 gram-atom of the metallic magnesium. Further, the halogen-containing compounds should be used in an amount of at least 0.0001 gram-atom, preferably at least 0.0005 gram-atom, most preferably at least 0.001 gram-atom, per 1 gram-atom of the metallic magnesium. With an amount less than 0.0001 gram-atom, such amount cannot distinguish the solid product from a reaction initiator. Also, in this case, grinding of the magnesium compound becomes indispensable.

In the present invention, the halogen or the halogen-containing compounds can be used alone or in any combination. In addition, the halogen and the halogen-containing compounds can be used in combination. In the case of using the halogen and the halogen-containing compound together, the total amount of halogen atom may be at least 0.0001 gram-atom, preferably at least 0.0005 gram-atom, more preferably at least 0.001 gram-atom, per 1 gram-atom of the metallic magnesium.

The amount of the halogen and/or the halogen-containing compounds has no upper limit and can be appropriately selected within a range wherein the desired solid product (a) is obtained. In general, such amount is preferably less than 0.06 gram-atom.

In this case, it is possible to freely control the particle size of the resulting solid catalyst (a) by selecting an appropriate amount of the halogen and/or the halogen-containing compound.

The reaction of metallic magnesium, alcohol, and halogen and/or a halogen-containing compound may be carried out by any known methods, for example, a method of reacting metallic magnesium, alcohol and halogen and/or a halogen-containing compound under reflux conditions (at about 79°C) until the reaction system does not evolve hydrogen gas any longer (usually 20 to 30 hours). More specifically, such known methods (in the case of using iodine as halogen) include: a method which comprises adding iodine in solid form to a mixture of alcohol and metallic magnesium, and reacting them under refluxing by heating; a method which comprises adding an alcohol solution of iodine dropwise to a mixture of alcohol and metallic magnesium, and reacting them under refluxing by heating; and a method which comprises adding an alcohol solution of iodine dropwise to a mixture of alcohol and metallic magnesium while heating the mixture.

Regardless of the method selected, the reaction should preferably be carried out in an inert gas atmosphere such as nitrogen and argon and, if necessary, in the presence of an inert organic solvent such as saturated hydrocarbons such as n-hexane.

It is not necessary to place the metallic magnesium, alcohol, and halogen and/or a halogen-containing compound all at once in the reaction vessel. It is possible to place them by portions in the reaction vessel. It is desirable to place all of the alcohol in the reaction vessel at the beginning and then to add metallic magnesium by portions several times. This procedure prevents the reaction system from evolving hydrogen gas in a large amount at one time and hence ensures safety and permits the use of a smaller reaction vessel, without the partial loss of alcohol and halogen and/ or a halogen-containing compound by splashing. The number of portions should be properly determined according to the size of the reaction vessel; but it is usually 5 to 10 to avoid unnecessary complexity.

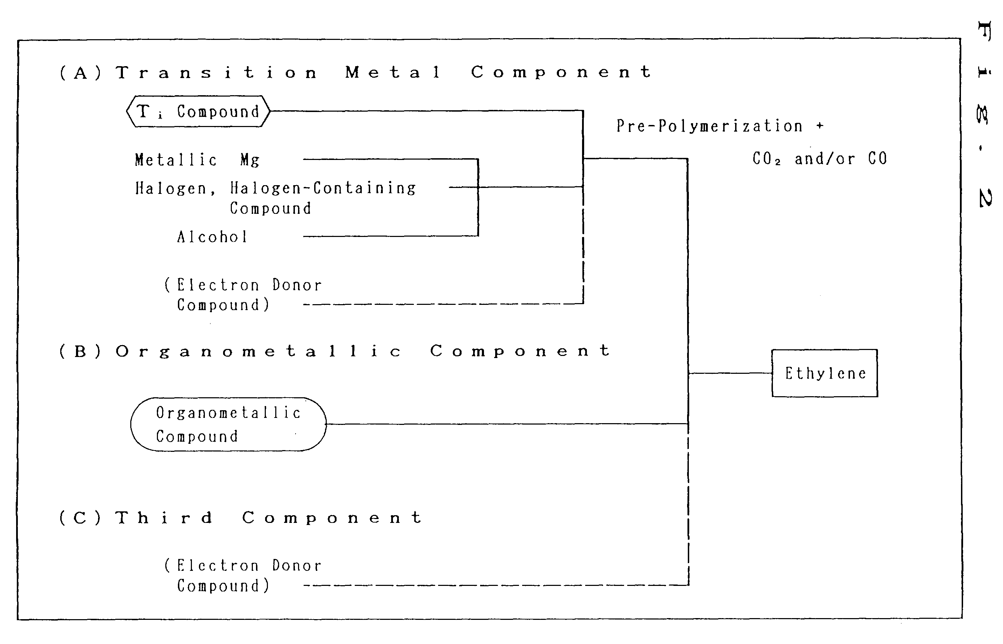

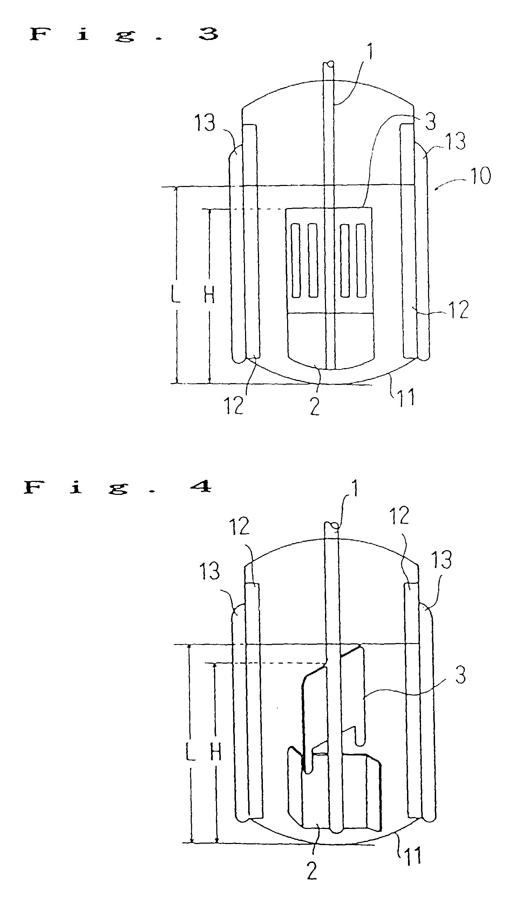

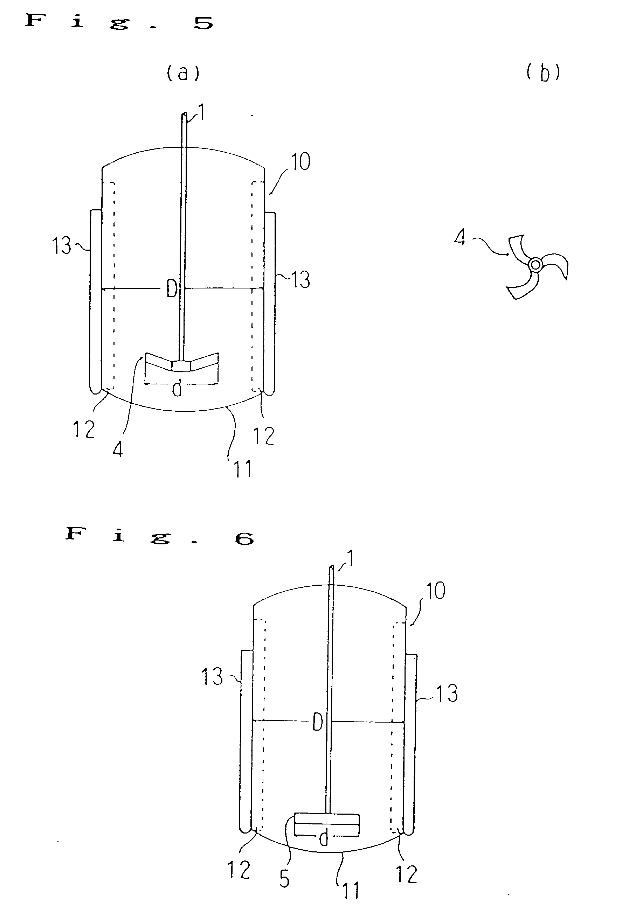

Further, in the case of carrying out a reaction on a large scale, a stirring vessel can be used. In this case, the stirring wing of the stirring vessel may preferably be a wing attached or fixed to a stirring axle placed in the center of the stirring vessel. Particularly suitable stirring wings include, for example, a glide wing such as a Max blend wing (Manufactured by Sumitomo Heavy Machinery) as shown in Fig. 3, and a multi-stage wing such as a full-zone wing (Manufactured by Shinkoh PanTec) as shown in Fig. 4.

The above stirring wing is fixed to a stirring axle 1 placed in the center of the stirring vessel 10, and comprises a bottom paddle wing located close to the bottom 11 of the vessel and an upper wing located higher than the bottom paddle wing. In this case, during a reaction the stirring wing is preferably used under conditions which satisfy the following equation:

$$H/L > 0.5$$

wherein H is height between the bottom of the vessel and the most upper portion of the upper wing; and L is liquid level during a reaction, and the most upper portion of the bottom paddle wing being located lower than the liquid level (third, fifth and eighth inventions).

The stirring wing can be modified in the following manners (1) to (5).

(1) It is preferable that the clearance between Bottom Paddle Wing 2 fixed to Rotation Axle 1 and Vessel Bottom 11 be smaller in order for particles to be sufficiently floated. Further, the number of the Bottom Paddle Wing 2 is not necessarily one, but can be plural to form, for example, a turbine wing. In addition, the Bottom Paddle Wing 2 may be a retreating wing.

(2) Upper Wing 3 is to sufficiently mix particles swept out by the Bottom Paddle Wing 2. The Upper Wing 3 may be integrally formed with the Bottom Paddle Wing 2 or may be multi-stage type. In addition, the Upper Wing 3 may have an angle with respect to the Bottom Paddle Wing 2, but may preferably be in the shape of glide.

(3) If a ratio of the height H between the Vessel Bottom 11 and the most upper portion of the Upper Wing 3, and Liquid Level L is not greater than 0.5, in the upper portion of a liquid to be treated, a portion where stirring is not well conducted is created. This results in generation of agglomeration and increase in amount of large particles. To avoid the generation of the agglomeration, the rotation rate of the stirring wing may be increased. However, in this case, the amount of micro-particles may be increased, leading to large particle size distribution. Therefore, H/L is preferably not less than 0.7, particularly not greater than 1.

(4) A ratio of Wind Diameter d to Vessel Diameter D is not particularly limited to, but may preferably be $0.3 < d/D < 0.8$, more preferably $0.4 < d/D < 0.6$.

(5) A plurality of Baffles 12 to be arranged in the axle direction, may be fixed on the wall surface of the Stirring Vessel 10. In addition, in figure, 13 denotes a jacket.

In the present invention, in the case of carrying out reactions using the stirring vessel, the reactions are carried out using a stirring wing fixed to a stirring axle placed in the center of the stirring vessel under stirring conditions which satisfies the following equation:

$$4.3 \times 10^3 < n^3 d^2 < 4.0 \times 10^6,$$

more preferably

$$9.8 \times 10^3 < n^3 d^2 < 3.6 \times 10^5,$$

more preferably

$$6.5 \times 10^4 < n^3 d^2 < 7.8 \times 10^4$$

wherein d (m) is a diameter of the stirring wing; and n (rpm) is rotation rate.

In this case, the stirring wings may be any wings which can be used for stirring or mixing slurry such as a paddle (flat feather) wing, inclined feather wing, turbine wing and anchor wing in addition to the above-mentioned Max blend wing and the above-mentioned full-zone wing. Further, the stirring wing may be one stage type or may be multi-stage type. In addition, a plurality of baffles to be arranged in the axle direction, may be fixed on the side wall surface of the stirring vessel.

As to the range of the rotation rate (number of revolution), if $n^3 d^2$ is not greater than $4.3 \times 10^3$, mixing of particles in slurry becomes extremely poor, resulting in the generation of agglomeration during the reaction. On the other hand, if $n^3 d^2$ is not less than $4.0 \times 10^6$, the particles are broken, resulting in increase of micro-particles and increase in particle size distribution. This gives rise to poor shapes (not spherical) of the resultant particles.

In this case, as the rotation rate increases, the average particle size increases. Thus, The average particle size can be freely controlled within the above range of the rotation rate, without changing the particle size distribution. In addition, as to the wing diameter, a ratio of Wing Diameter d to Vessel Diameter D is not particularly limited to, but may preferably ranges: $0.3 < d/D < 0.8$, more preferably $0.4 < d/D < 0.6$.

In addition, the reaction may be carried out batchwise or continuously. There is a modified method which comprises repeating the steps of adding a small portion of metallic magnesium to as much alcohol as necessary placed in a reaction vessel and removing the reaction product.

The thus obtained reaction product is used for the synthesis of the next solid catalyst component after drying or after filtration and washing with an inert solvent such as heptane. The obtained solid product (a) can be used as such in the following step without necessity of grinding or classification for a desired particle size distribution.

Further, the solid product (a) is almost spherical and has a sharp particle size distribution, with individual particles varying very little in sphericity. In this case, the solid product may preferably be composed of particles which have a sphericity (S) (as defined by Formula (1) above) of smaller than 1.60 and a particle size distribution index (P) (as defined by Formula (2) above) of smaller than 5.0.

The titanium compounds (b) used in the above-mentioned solid catalyst component (A) may be represented by, for example, the following formula:

$$TiX^1_n(OR^1)_{4-n}$$

wherein $X^1$ is a halogen atom, particularly a chlorine atom; $R^1$ is a hydrocarbon group having 1 to 10 carbon atoms, particularly a straight or branched alkyl group; if there are more than two $R^1$, they may be the same as or different from each other; and n is an integer of 0 to 4.

More specifically, these titanium compounds include $Ti(O-i-C_3H_7)_4$, $Ti(O-C_4H_9)_4$, $TiCl(O-C_2H_5)_3$, $TiCl(O-i-C_3H_7)_3$, $TiCl(O-C_4H_9)_3$, $TiCl_2(O-C_4H_9)_2$, $TiCl_2(O-i-C_3H_7)_2$ and $TiCl_4$.

In the above-mentioned solid catalyst component (A), if desired, any electron donor compounds (c) can be used. The electron donor compounds (c) usually include organic compounds containing an oxygen atom, nitrogen atom, phosphorus atom or sulphur atom. Examples of such compounds are amines, amides, ketones, nitriles, phosphines, phosmylamides, esters, ethers, thioethers, alcohols, thioesters, acid anhydrides, acid halides, aldehydes, organic acids and organosilicon compounds containing a Si-O-C linkage.

More specifically, examples of the electron donor compounds are aromatic carboxylic acids such as benzoic acid and p-oxybenzoic acid;

acid anhydrides such as succinic anhydride, benzoic anhydride and p-toluic anhydride;
ketones having 3-15 carbon atoms such as acetone, methyl ethyl ketone, methyl isobutyl ketone, acetophenone, benzophenone and benzoquinone;
aldehydes having 2-15 carbon atoms such as acetaldehyde, propionaldehyde, octyl aldehyde, benzaldehyde and naphthaldehyde;
esters having 2-18 carbon atoms such as methyl formate, ethyl formate, methyl acetate, ethyl acetate, vinyl acetate, propyl acetate, octyl acetate, cyclohexyl acetate, ethyl propionate, methyl butyrate, ethyl butyrate, ethyl valerate, methyl chloroacetate, ethyl dichloroacetate, methyl methoacrylate, ethyl crotonate, ethyl pivalate, dimethyl maleate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluate, ethyl toluate, amyl toluate, ethyl ethylbenzoate, methyl anisate, ethyl anisate, ethyl ethoxybenzoate, ethyl p-butoxybenzoate, ethyl o-chlorobenzoate, ethyl naphthoate, gamma-butyrolactone, δ-valerolactone, coumarin, phthalide and ethylene carbonate;
mono- and di-esters of aromatic dicarboxylic acids, especially mono- and and di-esters of phthalic acid, such as monomethyl phthalate, dimethyl phthalate, monomethyl terephthalate, dimethyl terephthalate, monoethyl phthalate, diethyl phthalate, monoethyl terephthalate, diethyl terephthalate, monopropyl phthalate, dipropyl phthalate, monopropyl terephthalate, dipropyl terephthalate, monobutyl phthalate, dibutyl phthalate, monobutyl terephthalate, dibutyl terephthalate, monoisobutyl phthalate, diisobutyl phthalate, monoamyl phthalate, diamyl phthalate, monoisoamyl phthalate, diisoamyl phthalate, ethyl butyl phthalate, ethyl isobutyl phthalate and ethyl propyl phthalate;
and acid halides having 2-20 carbon atoms, wherein the acid portion (acy group portion) is preferably an aliphatic (including those having a ring such as alicyclic) mono-, di- or trivalent acyl group having 2 to 20 carbon atoms (a hydroxyl group is withdrawn from a mono-, di- or tribasic acid), or an aromatic (including alkaryl and aralkyl) mono-, di- or trivalent acyl group having 7 to 20 carbon atoms (a hydroxyl group is withdrawn from a mono-, di- or tribasic acid), and the halogen contained in the acid halides is preferably chlorine or bromine, particularly chlorine.

In the present invention, acid halides which can be preferably used include, for example, acetyl chloride, acetyl bromide, propionyl chloride, butyryl chloride, isobutyryl chloride, 2-methylpropionyl chloride, valeryl chloride, isovaleryl chloride, hexanoyl chloride, methylhexanoyl chloride, 2-ethylhexanoyl chloride, octanoyl chloride, decanoyl chloride, undecanoyl chloride, hexadecanoyl chloride, octadecanoyl chloride, benzylcarbonyl chloride, cyclohexanecarbonyl chloride, malonyl dichloride, succinyl dichloride, pentanedioyl dichloride, hexanedioyl dichloride, cyclohexanedicarbonyl dichloride, benzoyl chloride, benzoyl bromide, methylbenzoyl chloride, phthaloyl chloride, isophthaloyl chloride, terephthaloyl chloride and benzene-1,2,4-tricarbonyl chloride. Of these compounds, phthaloyl chloride, isophthaloyl chloride and terephthaloyl chloride are particularly preferable. Phthaloyl chloride is most preferable. In addition, these acid halides may be used alone or in combination with one another.

The electron donor compounds (c) further include ethers having 2 to 20 carbon atoms such as methyl ether, ethyl ether, isopropyl ether, n-butyl ether, amyl ether, tetrahydrofuran, anisole, diphenyl ether, ethylene glycol butyl ether;

acid amides such as acetic acid amide, benzoic acid amide and toluic acid amide;

amines such as tributyl amine, N,N'-dimethylpiperazine, tribenzylamine, aniline, pyridine, pycoline, tetramethyl ethylene diamine;

nitriles such as acetonitrile, benzonitrile, tolunitrile; tetramethyl urea; nitro benzene; lithium butyrate;

organosilicon compounds having a Si-O-C linkage such as trimethylmethoxysilane, trimethylethoxysilane, dimethyldimethoxysilane, dimethyldiethoxysilane, diphenyldimethoxysilane, methylphenyldimethoxysilane, diphenyldiethoxysilane, phenyltrimethoxysilane, gamma-chloropropyltrimethoxysilane, methyltriethoxysilane, ethyltriethoxysilane, vinyltriethoxysilane, butyltriethoxysilane, phenyltriethoxysilane, gamma-aminopropyltriethoxysilane, chlorotriethoxysilane, ethyltriisopropoxysilane, vinyltributhoxysilane, isopropylcyclohexyldimethoxysilane, isobutylcyclohexyldimethoxysilane, tert.-butylcyclohexyldimethoxysilane, isopropylcyclohexyldiethoxysilane, isobutylcyclohexyldiethoxysilane, tert.-butylcyclohexyldiethoxysilane, methylcyclohexyldimethoxysilane, ethyl silicate, butyl silicate, trimethylphenoxysilane, methyltriallyloxysilane, vinyltris(beta-methoxyethoxy)silane, vinyltriacetoxysilane and dimethyltetraethoxydisiloxane.

Of these compounds, esters, ethers, ketones and acid anhydrides are preferable.

The solid catalyst component (A) can be prepared by any known methods using the above-mentioned solid product (a), the titanium compound (b) and if desired the electron donor compound (c). For example, it is preferable to produce the solid catalyst component (A) by bringing the solid product (a) into contact with the electron donor compound (c), and then bringing the obtained product into contact with the titanium compound (b).

There are no restrictions as to the condition under which the solid product (a) is brought into contact with the electron donor compound (c). Usually, the amount of the electron donor compound (c) is 0.01 to 10 moles, preferably 0.05 to 5 moles, per 1 mol of the solid product (a) in terms of magnesium atom. They should be kept in contact with each other for 5 minutes to 10 hours at 0 to 200°C, preferably for 30 minutes to 3 hours at 30 to 150°C. The reaction may be carried out in an inert hydrocarbon solvent such as pentane, hexane, heptane and octane.

There are no restrictions as to the condition under which the solid product (a) is brought into contact with the titanium compound (b), or the contact product of the solid product (a) and the electron donor compound (c) is brought into contact with titanium compound (b). Usually, the amount of the titanium compound (b) is 1 to 50 moles, preferably 2 to 20 moles, per 1 mol of magnesium in the solid product. The reaction is usually carried out for 5 minutes to 10 hours at 0 to 200°C, preferably for 30 minutes to 5 hours at 30 to 150°C.

Further, in the case of performing the reaction on a large scale, a stirring vessel is used. In this case, the stirring conditions may be the same as those described for the solid products.

For the contact reaction, the titanium compound (b) may be used alone as such if it is a liquid (like titanium tetrachloride); otherwise, it may be used in the form of solution in an inert hydrocarbon solvent (such as hexane, heptane and kerosene). Prior to the above-mentioned contact reaction, the solid product (a) may be treated with any one of halogenated hydrocarbons, halogen-containing silicon compounds, halogen gases, hydrogen chloride or hydrogen iodide.

In addition, after the contact reaction, the reaction product should preferably be washed with an inert hydrocarbon (such as n-hexane and n-heptane).

The catalyst component should preferably have a pore volume of not less than 0.4 cc/g and a specific surface area of not less than 300 m$^2$/g; otherwise it might be poor in catalytic activity. In addition, the pore volume and specific surface area can be obtained according to the BET method which depends on measuring the volume of nitrogen gas adsorbed to the sample. (See J. Am. Chem. Soc. Vol. 60, p. 309, 1983).

The above-mentioned organometallic compounds (B) which can be suitably used include organic compounds containing a metal belonging to Groups I to III of the Periodic Table. These metals include, for example, lithium, sodium, potassium, zinc, cadmium and aluminum, of which aluminum is preferable. Examples of the organometallic compound (B) include alkyl lithium such as methyl lithium, ethyl lithium, propyl lithium and butyl lithium, and dialkyl zinc such as dimethyl zinc, diethyl zinc, dipropyl zinc and dibutyl zinc.

The organoaluminum compounds which can be used in the present invention are represented by the following formula:

$$AlR^2_{m}X^2_{3-m}$$

wherein $R^2$ is an alkyl group having 1-10 carbon atoms, cycloalkyl group or aryl group; m is an integer of 1 to 3; and $X^2$ is a halogen atom such as chlorine or bromine.

Examples of the organoaluminum compound include trialkylaluminum compounds such as trimethylaluminum, triethylaluminum, triisopropylaluminum, triisobutylaluminum and trioctylaluminum; and dialkylaluminum monohalide compounds such as diethylaluminum monochloride, dipropylaluminum monochloride and dioctylaluminum monochloride.

In the process of the present invention, if desired, electron donor compound (C) can be used.

In this case, the above-mentioned electron donor compounds (c) which can be used to prepare the above solid catalyst component (A) can be used as the electron donor compounds (C). The electron donor compound (C) to be used may be the same as or different from the electron donor compounds to be used to prepare the above solid catalyst component (A).

Using the above-mentioned catalyst, gas phase polymerization of ethylene alone or gas phase polymerization of ethylene and the other alpha-olefin is carried out.

In this case, the other alpha-olefins are not particularly limited to, but usually include those represented by the following formula:

$$R^3\text{-CH=CH}_2$$

wherein $R^3$ is a hydrogen atom, a linear or branched $C_{1-20}$ alkyl group or cycloalkyl group.

Examples of the above olefins include straight-chain monoolefins excluding ethylene, such as propylene, butene-1, hexene-1 and octene-1; branched-chain monoolefins such as 4-methyl-pentene-1; and dienes such as butadiene.

Known polymerization conditions for gas phase polymerization can be used. For example, the temperature may be 20 to 120°C, preferably 40 to 115°C and the pressure may be at least normal pressure, preferably normal pressure to 70 Kg/cm$^2$ (1 Kg/cm$^2$ = 98.1 kPa), more preferably 2Kg/cm$^2$ to 60Kg/cm$^2$. The olefin partial pressure may be at least normal pressure, preferably normal pressure to 70 Kg/cm$^2$, more preferably 2 Kg/cm$^2$ to 60 Kg/cm$^2$.

Further, hydrogen or other chain transfer agents can be used to control molecular weight. In addition, the polymerization pressure can be controlled by introducing nitrogen or other inert gas.

The polymerization can be performed batchwise or continuously. In addition, multi-stage polymerization wherein two or more of different polymerization steps are separately carried out, can be adapted.

As shown in Fig. 2, after the above-mentioned solid catalyst component (A) is contacted with a small amount of olefin to form olefin polymers, and then contacted with at least one kind of gas selected from carbon monoxide and carbon dioxide, or a mixed gas of such gas and an inert gas, homopolymerization of ethylene or copolymerization of ethylene and the other alpha-olefin is performed using at least the compound (A) and an organometallic compound (B).

The pre-polymerization is performed by bringing the solid catalyst component (A) contact into a small amount of olefin. In this case, an olefin can be introduced immediately after the solid catalyst component (A) is prepared. The introduction can be conducted after aging for 0.2 to 3 hours. Further, the solid catalyst component (A) can be supplied in the form of suspension with an inert solvent, an olefin or the like.

The olefins which can be used for the pre-polymerization are not limited to, but may be usually represented by the following formula:

$$R^3\text{-CH=CH}_2$$

wherein $R^3$ is a hydrogen atom, a linear or branched $C_{1-20}$ alkyl group or cycloalkyl group.

Examples of the above olefins include straight-chain monoolefins such as ethylene, propylene, butene-1, hexene-1 and octene-1; and branched-chain monoolefins such as 4-methyl-pentene-1.

The amount of pre-polymerized products (olefin polymers) may be 0.1 to 100 grams, preferably 1 to 50 grams, per 1 gram of the solid catalyst component (A).

The solid catalyst component (A) treated by pre-polymerization as above is then contacted with carbon monoxide, carbon dioxide, mixtures thereof or mixtures of these and an inert gas, to stabilize the catalytic performance. Examples of the inert gas are argon gas and nitrogen gas. In this case, the solid catalyst component (A) which has been subjected to the pre-polymerization treatment may be in the dried state or the suspended state in an inert solvent. On the other hand, carbon monoxide and carbon dioxide can be usually used in the gaseous state. However, they can be used in the liquid or the solid state.

In addition, there are no specific restrictions as to the contact methods. Conventional methods which can be used for solid/gas contact, slurry/gas contact, solid/liquid contact, slurry/solid contact or the like can be used. Such convention methods include, for example, a bubbling method; a method wherein the pre-polymerization treated catalyst in the solid state of the slurry state and carbon monoxide or carbon dioxide in the gaseous state or the liquid state which co-exist in a closed reactor, are contacted under stirring conditions; and a method using the scrubber system. Also, carbon oxide in the solid state can be contacted with the pre-polymerization treated catalyst in the dried state or the slurry state. Among these methods, the bubbling method wherein the pre-polymerization treated catalyst in the slurry state or the solid state is contacted under bubbling conditions with carbon monoxide or carbon dioxide gas; and a method wherein the pre-polymerization treated catalyst in the solid state of the slurry state and carbon monoxide or carbon dioxide in the gaseous state or the liquid state which co-exist in a closed reactor, are contacted under stirring conditions.

In addition, polymerization methods other than gas phase polymerization such as slurry polymerization and solution polymerization, can be used.

Catalysts showing high catalytic activity and high stereo-regularity for long time and polymers having good powder morphology can be obtained, without using particle size control treatment such as grinding, by using a solid product (a) obtained by the reaction of metallic magnesium, alcohol and halogen and/or halogen-containing compound as an ethylene polymerization catalyst for gas phase polymerization. In addition, the generation of micro-powders of the resultant polymer can be restricted even when hydrogen is used as molecular weight controlling agent.

Further, according to the present invention, pre-polymerization treatment of the solid catalyst component (A) at high slurry concentration can be effectively performed without sacrificing the catalyst performance. Accordingly, in the present invention, a smaller pre-polymerization reactor can be used, leading to advantages in facility construction. In addition, due to increase in the reaction rate, the pre-polymerization can be performed under low pressure for short time. This results in reduction in operation cost of the pre-polymerization, leading to cost down.

Brief Description of the Drawings

Fig. 1 is a flowchart showing the first invention of the present application;
Fig. 2 is a flowchart showing the second invention of the present application;
Fig. 3 is a schematic view for explanation of the third to ninth inventions of the present application, and showing a stirring vessel having a max blend wing;
Fig. 4 is a schematic view for explanation of the third to ninth inventions of the present application, and showing a stirring vessel having a full-zone wing;
Fig. 5 is a schematic view for explanation of the third to ninth inventions of the present application; Fig. 5 (a) is a schematic view showing a stirring vessel having a paddle wing; Fig. 5 (b) is a plane view showing a paddle wing; and
Fig. 6 is a schematic view for explanation of the third to ninth inventions, and showing a stirring vessel having a fuddler wing.

Best Embodiment For Carrying Out the Invention

The present invention will be described in more detail with reference to Examples and Comparative Examples; however the present invention is not limited to the following Examples.

In the following Examples and Comparative Examples, the following reagents were used.

Metallic Magnesium: Granular Form (350 micrometers in average particle size.)
Ethanol: Reagent First Grade (Made by Wako Junyaku Co.)
Iodine: Reagent First Grade (Made by Wako Junyaku Co.)
Anhydrous Magnesium Chloride: Reagent First Grade (Made by Wako Junyaku Co.)

Measurements of X-ray diffraction were carried out in the following manner.

The magnesium compound was ground into powders having an average particle size of 10 $\mu$m, which was subsequently vacuum-dried at normal temperature. The dry powder was filled in a cell of Mylar film under an inert gas atmosphere. The Mylar film is 6 $\mu$m thick and the cell is 1 mm thick (including the thickness of the Mylar film and dry powder). The cell was attached to the powder X-ray diffraction apparatus (made by Rigaku Denki Kogyo Co.) for measurement of X-ray diffraction spectrum by the transmission method. X-rays having a wavelength ($\lambda K\alpha$) of 1.543 A were generated by using a copper anticathode at a voltage of 50 kV and a current of 120 mA.

The examples 1-9, 16-19 and 21-23 are outside the scope of the invention.

Example 1

(1) Preparation of Solid Product (a):

A glass reactor (inner volume: 6 liters) equipped with a stirrer, was sufficiently purged with nitrogen, and charged with about 2430 g of ethanol, 16 g of iodine and 160 g of metallic magnesium. The reaction was carried out with stirring under heat-refluxing conditions until no hydrogen was evolved any longer to obtain a solid reaction product. The reaction liquid containing the solid product was dried under reduced pressure to obtain a solid product (a). The solid product obtained had a sphericity (S) of 1.20 and a particle size distribution index (P) of 1.8.

The solid product was analyzed by X-ray diffractometry with Cu-K$\alpha$ line. As a result, three diffraction peaks appeared within the range of $2\theta = 5\text{-}20°$. The ratio of the peak intensity b/c was 0.75, where the peaks are designated as a, b, and c starting from the low scattering angle side.

(2) Preparation of Solid Catalyst Component (A)

In a three-mouth glass flask (inner volume: 500 ml) sufficiently purged with nitrogen gas, were placed 16 g of the above-mentioned solid product (a) (not ground), 80 ml of purified heptane, 2.4 ml of silicon tetrachloride and 2.3 ml of diethyl phthalate. After 77 ml of titanium tetrachloride were added with stirring at 90°C, the reaction was carried out at 110°C for 2 hours. Then, the solid component was separated and washed with purified heptane heated to 80°C. After 122 ml of titanium tetrachloride were further added, the reaction was carried out at 110°C for 2 hours. The reaction product was washed with purified heptane to obtain a solid catalyst component (A). The solid catalyst component had a specific surface area of 413 m$^2$/g and a pore volume of 0.56 cc/g.

(3) Ethylene Homopolymerization

A stainless steel autoclave (inner volume: 4.5 liters) equipped with a stirrer (anchor type wing), was charged with 30 g of polyethylene powders, and subjected to vacuum-heat dry treatment at 80°C. The temperature was decreased to 70°C and the pressure was restored to atmospheric pressure with nitrogen. Then, 5 Kg/cm$^2$ of hydrogen and 15Kg/cm$^2$ of ethylene were introduced to raise a total pressure to 20 Kg/cm$^2$. Immediately after 1.5 mmol of triethylaluminum and 0.01 mmol of the solid catalyst component obtained in Step (2) were added to 30 ml of dried heptane, these were supplied to the reactor to initiate the reaction. While the reaction temperature and pressure were kept at the same level, ethylene was continuously supplied. After the reaction was carried out for 2 hours, the reactor was depressurized and a sample was obtained.

The results are as shown in Table 1.

Example 2

The procedure of Example 1 (1) was repeated except that a solid product (a) was prepared from about 2430 g of ethanol, 1.6 g of iodine and 160 g of metallic magnesium. Using this solid product (a), a solid catalyst component (A) was prepared, and further the polymerization was carried out in the same manner as in Example 1 (2) and (3).

The results are as shown in Table 1.

Example 3

A solid product (a) was prepared in the same manner as in Example 1 (1). Subsequently, the procedure of Example 1 (2) was repeated except that 1.9 ml of dimethyl phthalate were used instead of diethyl phthalate, to obtain a solid catalyst component (A). Using this solid product (A), the polymerization was carried out in the same manner as in Example 1 (3).

Ther results are as shown in Table 1.

Example 4

The procedure of Example 1 (1) to (3) was repeated except that in Example 1 (3), the hydrogen partial pressure, the ethylene partial pressure and the polymerization temperature were changed as shown in Table 1.

The results are as shown in Table 1.

Example 5

The procedure of Example 1 (1) to (3) was repeated except that in Example 1 (3), triisobutylaluminum was used instead of triethylaluminum.

The results are as shown in Table 1.

Example 6

(1) Preparation of Solid Product (a):

The procedure of Example 1 (1) was repeated to prepare a solid product (a).

(2) Preparation of Solid Catalyst Component (A):

In a three-mouth glass flask (inner volume: 500 ml) sufficiently purged with nitrogen gas, were placed 16 g of the above-mentioned solid product (a) (not ground), 60 ml of purified heptane, 2.5 ml of silicon tetrachloride and 2.4 ml of diethyl phthalate. After 308 ml of titanium tetrachloride were added with stirring at 90°C, the reaction was carried out at 110°C for 2 hours. Then, the solid component was separated and washed with purified heptane, to obtain a solid catalyst component (A).

(3) Ethylene Homopolymerization:

The polymerization was carried out using the solid catalyst component (A) obtained in the same manner as in Example 1 (3).

The results are as shown in Table 1.

Example 7

(1) Preparation of Solid Product (a):

The procedure of Example 1 (1) was repeated to prepare a solid product (a).

(2) Preparation of Solid Catalyst Component (A):

Using the solid product (a) obtained, a solid catalyst component (A) was prepared in the same manner as in Example 1 (2).

(3) Ethylene-Butene Copolymerization:

A stainless steel autoclave (inner volume: 4.5 liters) equipped with a stirrer (anchor type wing), was charged with 30 g of polyethylene powders, and subjected to vacuum-heat dry treatment at 80°C. The temperature was decreased to 70°C and the pressure was restored to atmospheric pressure with nitrogen. Then, 5 Kg/cm$^2$ of hydrogen, 1.7 Kg/cm$^2$ of 1-butene and 15Kg/cm$^2$ of ethylene were introduced to raise a total pressure to 21.7 Kg/cm$^2$. Immediately after 1.5 mmol of triethylaluminum and 0.01 mmol of the solid catalyst component (A) obtained in Step (2) were added to 30 ml of dried heptane, these were supplied to the reactor to initiate the reaction. While the reaction temperature and pressure were kept at the same level, ethylene was continuously supplied. After the reaction was carried out for 2 hours, the reactor was depressurized and a sample was obtained.

The results are as shown in Table 1.

Example 8

The procedure of Example 7 (1) to (3) was repeated except that in Example 7 (3), the gas formulation was changed as shown in Table 1.

Ther results are as shown in Table 1.

Example 9

(1) Preparation of Solid Product (a):

A glass reactor (inner volume: 6 liters) equipped with a stirrer, was sufficiently purged with nitrogen, and charged with about 2430 g of ethanol, 6 g of anhydrous magnesium chloride and 160 g of metallic magnesium. The reaction was carried out with stirring under heat-refluxing conditions until no hydrogen was evolved any longer to obtain a solid reaction product. The reaction liquid containing the solid product was dried under reduced pressure to obtain a solid product (a).

The solid product (a) was analyzed by X-ray diffractometry with Cu-K$\alpha$ line. As a result, three diffraction peaks appeared within the range of $2 = 5$-$20°$. The ratio of the peak intensity b/c was 0.70, where the peaks are designated as a, b, and c starting from the low scattering angle side.

(2) Preparation of Solid Catalyst Component (A)

In a three-mouth glass flask (inner volume: 500 ml) sufficiently purged with nitrogen gas, were placed 16 g of the above-mentioned solid product (a) (not ground), 80 ml of purified heptane, 2.4 ml of silicon tetrachloride and 2.3 ml of diethyl phthalate. After 77 ml of titanium tetrachloride were added with stirring at 90°C, the reaction was carried out at 110°C for 2 hours. After 122 ml of titanium tetrachloride were further added, the reaction was carried out at 110°C for 2 hours. The reaction product was washed with purified heptane to obtain a solid catalyst component (A). The solid catalyst component had a specific surface area of 429 $m^2$/g and a pore volume of 0.57 cc/g.

(3) Ethylene Homopolymerization

Using the solid catalyst component (A) obtained, the polymerization was carried out in the same manner as in Example 1 (3).

The results are as shown in Table 1.

Example 10

(1) Preparation of Solid Product (a):

The procedure of Example 1 (1) was repeated to prepare a solid product (a).

(2) Preparation of Solid Catalyst Component (A):

The procedure of Example 1 (2) was repeated to prepare a solid catalyst component (A).

(3) Pre-Polymerization, Contact with Carbon Dioxide:

In a glass flask (inner volume: 1 liter) equipped with a stirrer, were placed 20 g of the above-mentioned solid product (a) and 0.025 mol of triethylaluminum. While ethylene was supplied to keep an ethylene partial pressure of 0.5 Kg/$cm^2$·G at 20°C for 60 minutes, 2 g per 1 g of the solid catalyst component (A), were polymerized.

After the completion of the reaction, the liquid phase portion was degassed and washed with 500 ml of n-heptane three times. Then, carbon dioxide gas was supplied by pressure until its partial pressure became 2.0 Kg/$cm^2$·G and contacted for 24 hours, to obtain a solid catalyst component (A).

In addition, a part of this solid catalyst component (A) was withdrawn and left in liquid propylene for 24 hours. However, a polymer was not formed.

(4) Ethylene Homopolymerization:

Using the solid catalyst component (A), the polymerization was carried out in the same manner as in Example 1 (3).

The results are as shown in Table 1.

Example 11

A solid product (a) and a solid catalyst component (A) were prepared in the same manner as in Example 9 (1) and (2). Using this solid catalyst component (A), the procedure of Examples 10 (3) to (4) was repeated.

The results are as shown in Table 1.

Example 12

The procedure of Example 10 (1) to (4) was repeated except that in Example 10 (3), propylene was used as an olefin used for pre-polymerization.
The results are as shown in Table 1.

Example 13

The procedure of Example 12 was repeated except that in Example the amount of propylene used for pre-polymerization was changed to 0.8 g per 1 g of the solid catalyst component.
The results are as shown in Table 1.

Example 14

The procedure of Example 10 (1) to (4) was repeated except that in Example 10 (3), 0.01 mol of triethylaluminum were used; the reaction temperature was changed to 40°C; and 140 g of butene were used as an olefin used for pre-polymerization.
The results are as shown in Table 1.

Example 15

The procedure of Example 10 (1) to (4) was repeated except that in Example 10 (3), 4-methyl-pentene-1 was used as an olefin used for pre-polymerization.
The results are as shown in Table 1.

Example 16

(1) Preparation of Solid Product (a):

The procedure of Example 1 (1) was repeated to prepare a solid product (a).

(2) Preparation of Solid Catalyst Component (A):

The procedure of Example 1 (2) was repeated to prepare a solid catalyst component (A).

(3) Two-Stage Polymerization:

A stainless steel autoclave (inner volume: 4.5 liters) equipped with a stirrer (anchor type wing), was charged with 30 g of polyethylene powders (average particle size: 1000 micrometers, $[\eta] = 3.0$ dl/g), and subjected to vacuum-heat dry treatment at 80°C. The temperature was elevated to 90°C and the pressure was restored to atmospheric pressure with nitrogen. Then, 10 Kg/cm$^2$ of hydrogen and 5Kg/cm$^2$ of ethylene were introduced. Immediately after 1.0 mmol of triisobutylaluminum and 0.02 mmol-Ti of the above solid catalyst component (A) were added to 30 ml of dried heptane, these were supplied to the reactor to initiate the reaction. While the reaction temperature and pressure were kept at the same level, ethylene was continuously supplied. After the reaction was carried out for 105 minutes, the reactor was degassed and the pressure was restored to atmospheric pressure with nitrogen. Then, the reaction temperature was raised to 80°C, 0.06 Kg/cm$^2$ of hydrogen, 1.3 Kg/cm$^2$ of 1-butene and 10 Kg/cm$^2$ of ethylene were introduced. While the reaction temperature and pressure were kept at the same level, ethylene was continuously supplied. After the reaction was carried out for 55 minutes, the reactor was depressurized and a sample was obtained.
The results are as shown in Table 2.

Example 17

(1) Preparation of Solid Product (a):

The procedure of Example 1 (1) was repeated to prepare a solid product (a).

(2) Preparation of Solid Catalyst Component (A):

The procedure of Example 1 (2) was repeated to prepare a solid catalyst component (A).

(3) Two-Stage Polymerization:

A stainless steel autoclave (inner volume: 4.5 liters) equipped with a stirrer (anchor type wing), was charged with 30 g of polyethylene powders (average particle size: 1000 micrometers, $[\eta] = 3.0$ dl/g), and subjected to vacuum-heat dry treatment at 80°C. While the temperature was kept at 80°C, the pressure was restored to atmospheric pressure with nitrogen. Then, 0.04 Kg/cm$^2$ of hydrogen, 1.3 Kg/cm$^2$ of 1-butene and 7.5 Kg/cm$^2$ of ethylene were introduced. Immediately after 1.0 mmol of triisobutylaluminum and 0.02 mmol-Ti of the above solid catalyst component (A) were added to 30 ml of dried heptane, these were supplied to the reactor to initiate the reaction. While the reaction temperature and pressure were kept at the same level, ethylene was continuously supplied. After the reaction was carried out for 60 minutes, the reactor was degassed and the pressure was restored to atmospheric pressure with nitrogen. Then, 15 Kg/cm$^2$ of hydrogen and 7.5 Kg/cm$^2$ of ethylene were further introduced at 90°C. While the reaction temperature and pressure were kept at the same level, ethylene was continuously supplied. After the reaction was carried out for 120 minutes, the reactor was depressurized and a sample was obtained.
The results are as shown in Table 2.

Example 18

(1) Preparation of Solid Product (a):

The procedure of Example 9 (1) was repeated to prepare a solid product (a).

(2) Preparation of Solid Catalyst Component (A):

The procedure of Example 9 (2) was repeated to prepare a solid catalyst component (A).

(3) Two-Stage Polymerization:

The procedure of Example 16 (3) was repeated except that the reaction time was changed as shown in Table 2. The results are as shown in Table 2.

Example 19

(1) Preparation of Solid Product (a):

The procedure of Example 9 (1) was repeated to prepare a solid product (a).

(2) Preparation of Solid Catalyst Component (A):

The procedure of Example 9 (2) was repeated to prepare a solid catalyst component (A).

(3) Two-Stage Polymerization:

The procedure of Example 17 (3) was repeated except that the reaction time was changed as shown in Table 2. The results are as shown in Table 2.

Example 20

(1) Preparation of Solid Product (a):

The procedure of Example 1 (1) was repeated to prepare a solid product (a).

(2) Preparation of Solid Catalyst Component (A):

The procedure of Example 1 (2) was repeated to prepare a solid catalyst component (A).

(3) Pre-Polymerization, Contact with Carbon Dioxide:

In a glass reactor (inner volume: 1 liter) equipped with a stirrer, were placed 500 ml of n-heptane, 20 g of the above-mentioned solid product (a) and 0.025 mol of triethylaluminum. While propylene was supplied to keep a propylene partial pressure of 0.2 $Kg/cm_2 \cdot G$ at 20°C for 25 minutes, 2 g per 1 g of the solid catalyst component (A), were polymerized.

After the completion of the reaction, the liquid phase portion was degassed and washed with 500 ml of n-heptane three times. Then, carbon dioxide gas was supplied by pressure until its partial pressure became 2.0 $Kg/cm^2 \cdot G$, and contacted for 24 hours, to obtain a solid catalyst component (A).

In addition, a part of this solid catalyst component (A) was withdrawn and left in liquid propylene for 24 hours. However, a polymer was not formed.

(4) Two-Stage Polymerization:

Using the solid catalyst component (A), the polymerization was carried out in the same manner as in Example 1 (3). The results are as shown in Table 2.

Comparative Example 1

The procedure of Example 1 (1) was repeated except that iodine was not used, to prepare a solid product. The solid product obtained was ground with a 1-liter stainless ball mil for 24 hours.

A solid catalyst component (A) was prepared using the obtained solid product and then the polymerization was carried out in the same manner as in Example 1 (2) and (3).

The results are as shown in Table 3.

Comparative Example 2

The procedure of Example 1 (1) was repeated except that a solid product (a) was prepared from about 2430 g of ethanol, 0.042 g of iodine and 160 g of metallic magnesium. Using this solid product (a), a solid catalyst component (A) was prepared, and further the polymerization was carried out in the same manner as in Example 1 (2) and (3).

Ther results are as shown in Table 3.

Comparative Example 3

The procedure of Comparative Example 1 was repeated except that a solid product was used as such without being ground and then the polymerization was carried out.

Ther results are as shown in Table 3.

Comparative Example 4

(1) Preparation of Solid Product (a):

The procedure of Comparative Example 1 was repeated to prepare a solid product (a).

(2) Preparation of Solid Catalyst Component (A):

The procedure of Comprative Example 1 was repeated to prepare a solid catalyst component (A).

(3) Two-Stage Polymerization:

The procedure of Example 16 was repeated except that the reaction time was changed as shown in Table 2. The results are as shown in Table 2.

Comparative Example 5

(1) Preparation of Solid Product (a):

The procedure of Comparative Example 1 was repeated to prepare a solid product (a).

(2) Preparation of Solid Catalyst Component (A):

The procedure of Comparative Example 1 was repeated to prepare a solid catalyst component (A).

(3) Two-Stage Polymerization:

The procedure of Example 17 was repeated except that the reaction time was changed as shown in Table 2. The results are as shown in Table 2.

EP 0 544 919 B1

Table 1

| Example | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Polymerization Temperature (°C) | 70 | 70 | 70 | 70 | 90 | 70 | 70 | 70 | 70 | 70 | 70 | 70 | 70 | 70 | 70 |
| Ethylene Partial Pressure (Kg/cm²) | 15 | 15 | 15 | 15 | 10 | 15 | 15 | 15 | 15 | 15 | 15 | 15 | 15 | 15 | 15 |
| 1-Butene Partial Pressure (Kg/cm²) | 0 | 0 | 0 | 0 | 0 | 0 | 0.7 | 2.7 | 0 | 0 | 0 | 0 | 0 | 0 | 0 |
| Hydrogen Partial Pressure (Kg/cm²) | 5.0 | 5.0 | 5.0 | 5.0 | 10 | 5.0 | 5.0 | 5.0 | 5.0 | 5.0 | 5.0 | 5.0 | 5.0 | 5.0 | 5.0 |
| Catalytic Activity (Kg/g-Ti) | 620 | 662 | 585 | 654 | 369 | 632 | 550 | 582 | 607 | 611 | 705 | 651 | 745 | 622 | 617 |
| Weight Average Particle Size(μm) | 1100 | 1200 | 1100 | 1100 | 600 | 1100 | 750 | 700 | 1100 | 1000 | 1200 | 1000 | 1200 | 1100 | 1000 |
| Micro-Powder Ratio (105 μm>wt%) | 0.4 | 0.2 | 0.3 | 0.3 | 1.2 | 0.2 | 0.8 | 0.9 | 0.3 | 0.1 | 0.0 | 0.1 | 0.1 | 0.1 | 0.1 |
| [$\eta$] (dl/g) | 3.1 | 3.1 | 3.1 | 3.2 | 1.1 | 3.2 | 3.0 | 3.0 | 3.1 | 3.1 | 3.1 | 3.1 | 3.2 | 3.0 | 3.0 |
| Density (g/cm²) | 0.955 | 0.955 | 0.954 | 0.955 | 0.957 | 0.954 | 0.938 | 0.932 | 0.955 | 0.955 | 0.955 | 0.955 | 0.954 | 0.954 | 0.954 |

[$\eta$] : Measured at 135 °C in decalin.
Weight Average Particle Size, Micro-Powder Ratio : Measured by a sieve.

Table 2

| Example | Example 16 | | Example 17 | | Example 18 | | Example 19 | | Comp.Exam. 4 | | Comp.Exam. 5 | | Example 20 | |
|---|---|---|---|---|---|---|---|---|---|---|---|---|---|---|
| Polymerization Temperature (°C) | 90 | 80 | 80 | 90 | 90 | 80 | 80 | 90 | 90 | 80 | 80 | 90 | 80 | 90 |
| Ethylene Partial Pressure (Kg/cm²) | 5.0 | 10 | 7.5 | 7.5 | 5.0 | 10 | 7.5 | 7.5 | 5.0 | 10 | 7.5 | 7.5 | 7.5 | 7.5 |
| 1-Butene Partial Pressure (Kg/cm²) | 0 | 1.3 | 1.3 | 0 | 0 | 1.3 | 1.3 | 0 | 0 | 1.3 | 1.3 | 0 | 1.3 | 0 |
| Hydrogen Partial Pressure (Kg/cm²) | 10 | 0.06 | 0.04 | 15 | 10 | 0.06 | 0.04 | 15 | 10 | 0.06 | 0.04 | 15 | 0.04 | 15 |
| Amount of Ethylene Consumption (Nl) | 250 | 225 | 225 | 250 | 250 | 225 | 225 | 250 | 250 | 225 | 225 | 250 | 225 | 250 |
| Polymerization Time (min) | 105 | 55 | 60 | 120 | 114 | 60 | 66 | 133 | 105 | 75 | 65 | 175 | 55 | 116 |
| [η] (dl/g) | 0.6 | 3.4 | 6.5 | 3.5 | 0.5 | 3.5 | 6.3 | 3.4 | 0.6 | 3.4 | 6.3 | 3.5 | 6.5 | 3.5 |
| Mw/Mn | - | 40 | - | 35 | - | 43 | - | 34 | - | 39 | - | 33 | - | 41 |
| Density (g/cm²) | - | 0.955 | - | 0.957 | - | 0.956 | - | 0.957 | - | 0.955 | - | 0.956 | - | 0.955 |
| Weight Average Particle Size(μm) | - | 570 | - | 840 | - | 620 | - | 890 | - | 220 | - | 240 | - | 900 |
| Micro-Powder Ratio (105 μm>wt%) | - | 3.0 | - | 1.1 | - | 2.7 | - | 0.8 | - | 27 | - | 25 | - | 0.3 |

[η] : Measured at 135 °C in decalin.
Weight Average Particle Size, Micro-Powder Ratio : Measured by a sieve.
Mw/Mn : Measured by GPC.

EP 0 544 919 B1

Table 3

| Comparative Example | 1 | 2 | 3 |
|---|---|---|---|
| Polymerization Temperature (°C) | 70 | 70 | 70 |
| Ethylene Partial Pressure (Kg/cm²) | 15 | 15 | 15 |
| 1-Butene Partial Pressure (Kg/cm²) | 0 | 0 | 0 |
| Hydrogen Partial Pressure (Kg/cm²) | 5.0 | 5.0 | 5.0 |
| Catalytic Activity (Kg/g-Ti) | 501 | 410 | 122 |
| Weight Average Particle Size(μm) | 330 | 450 | 250 |
| Micro-Powder Ratio (105 μm>wt%) | 15 | 13 | 23 |
| [η] (dl/g) | 3.1 | 3.1 | 3.1 |
| Density (g/cm²) | 0.955 | 0.955 | 0.954 |

[η] : Measured at 135 °C in decalin.
Weight Average Particle Size, Micro-Powder Ratio : Measured by a sieve.

## Example 21

(1) Preparation of Solid Product (a):

A SUS-made reactor equipped with a stirrer (vertical type with four baffles as shown in Table 4), was sufficiently purged with nitrogen and charged with 31 Kg of ethanol, 0.2 Kg of iodine and 2.2 Kg of metallic magnesium. The reaction was carried out with agitation under refluxing conditions until no hydrogen was evolved any longer, to obtain a solid reaction product.

The Max blend wing as shown in Fig. 3 (as indicated in Table 4; Manufactured by Sumitomo Heavy Machinery) was used as a stirring wing, and the stirring rotation rate was set at 130 rpm.

The reaction solution containing the solid reaction product was dried under reduced pressure to obtain a solid product.

The solid product was analyzed by X-ray diffractometry with Cu-Kα line. As a result, three diffraction peaks appeared within the range of $2\theta = 5$-$20°$. The ratio of the peak intensity b/c was 0.75, where the peaks are designated as a, b, and c starting from the low scattering angle side.

(2) Preparation of Solid Catalyst Component (A)

A SUS-made reactor equipped with a stirrer similar to that used in Step (1) was sufficiently purged with nitrogen gas, and charged with 4 Kg of the above-mentioned solid product (a) (not ground) and 20 liters of dehydrated heptane. Under stirring conditions, 0.6 liters of silicon tetrachloride were added. Further, 0.63 liters of diethyl phthalate were added and the temperature was kept at 60°C. After 20 liters of titanium tetrachloride were added, the reaction was carried out at 110°C for 2 hours. The reaction mixture was washed with heptane heated to 80°C. After 25 liters of titanium tetrachloride were further added, the reaction was carried out at 110°C for 2 hours. The reaction product was washed with heptane to obtain a solid catalyst component (A).

The Max blend wing as shown in Fig. 3 (as indicated in Table 4; Manufactured by Sumitomo Heavy Machinery) was used as a stirring wing, and the stirring rotation rate was set at 130 rpm.

(3) Polymerization

A SUS-maid autoclave (inner volume: 1.0 liter) sufficiently purged with argon gas, was charged with 400 ml of purified heptane, 1 mmol of triethylaluminum, 0.25 mmol of cyclohexylmethyldimethoxysilane and 0.005 mmol, in terms of Ti atom, of the above solid catalyst component (A). Then, hydrogen was added to raise its partial pressure to 0.5 $Kg/cm^2$ and the propylene polymerization was carried out under a total pressure of 8 $Kg/cm^2$ at 70°C for 2 hours.

The results are as shown in Tables 4 and 6.

In addition, "Stereo-regularity" used in the Table means an insoluble fraction extracted from boiling heptane for 6 hours.

The sphericity (S) and the particle size distribution index (P) were measured in the following manner.

(1) In the case of Solid Product (a):

Sphericity (S): A sample of dried Solid Product (a) was photographed with a magnification of x 150 using a scanning electron microscope (Model JSM-25S III, made by Nippon Denshi Co.) at an accelerating voltage of 5 kV. The resulting negative underwent image processing by the transmission method using an image processing apparatus (made by Nexus Co.). Particles smaller than 20 pixels (each pixel measuring 1.389 micrometer square) were disregarded, and the remaining particles (about 2000 pieces) were examined. The sphericity was calculated according to Formula (1) above from $E_1$ (the projected perimeter of a particle) and $E_2$ (the perimeter of the circle of equal projected area of a particle).

Particle Size Distribution Index (P): Particle sizes of the solid product particles were measured by the light transmission method when they were suspended in liquid hydrocarbon. The 90% particle diameter ($D_{90}$) and 10% particle diameter ($D_{10}$) were obtained from the particle size distribution plotted on a logarithmic distribution paper. Then, the particle size distribution index (P) was calculated according to Formula (2) above.

(2) In the case of Polyolefin Powders:

Sphericity (S): A sample of polyolefin powders was subjected to image processing by the direct reflection method. The sphericity was calculated according to Formula (1) above in the same manner as in Solid Product (a) except that each pixel measured 0.0813 micrometer square.

Particle Size Distribution Index (P): The particle size distribution was measured by sieving. The 90% particle diameter ($D_{90}$) and 10% particle diameter ($D_{10}$) were obtained from the particle size distribution plotted on a logarithmic distribution paper. Then, the particle size distribution index (P) was calculated according to Formula (2) above.

The above procedure was followed in the following Examples and Comparative Examples.

Example 22

(1) Preparation of Solid Product (a):

The procedure of Example 21 was repeated except that the reaction wing was changed to a full-zone wing as shown in Fig. 4 (Manufactured by Shinkoh PanTec) and the stirring rotation rate was changed to 110 rpm.

(2) Preparation of Catalyst Component (A):

The procedure of Example 21 was repeated using the solid product (a) obtained.

(3) Polymerization:

The procedure of Example 21 was repeated using the solid catalyst composition (A).
The results are as shown in Tables 4 and 6.

Example 23

(1) Preparation of Solid Product (a):

A glass reactor equipped with a stirrer (vertical type with four baffles as shown in Table 4), was sufficiently purged with argon, and charged with 200 g of ethanol, 1.3 g of iodine and 14 g of metallic magnesium. The reaction was carried out with stirring under refluxing conditions until no hydrogen was evolved any longer to obtain a solid reaction product.
The stirring conditions are as shown in Table 4.
The reaction liquid containing the solid product was dried under reduced pressure to obtain a solid product.

(2) Preparation of Solid Catalyst Composition (A):

A three-mouth flask (vertical type with four baffles; vessel diameter: 0.08 m; inner volume: 0.5 liters) sufficiently purged with argon gas, was charged with 16 g of the above-mentioned solid product (a) (not ground) and 80 ml of dehydrated heptane. Under stirring conditions, 2.4 ml of silicon tetrachloride were added. Further, 2.5 ml of diethyl phthalate were added and the temperature was kept at 60°C. After 80 ml of titanium tetrachloride were added, the reaction was carried out at 110°C for 2 hours. The reaction mixture was washed with heptane heated to 80°C. After 80 ml of titanium tetrachloride were further added, the reaction was carried out at 110°C for 2 hours. The reaction product was washed with heptane to obtain a solid catalyst composition (A).
The stirring conditions are as shown in Table 4.

(3) Polymerization:

The procedure of Example 21 was repeated using the solid product composition (A).
The results are as shown in Tables 4 and 6.

Example 24

(1) Preparation of Solid Product (a):

The procedure of Example 21 was repeated except that 0.082 Kg of magnesium chloride were used instead of 0.2 Kg of iodine.

(2) Preparation of Solid Catalyst Composition (A):

The procedure of Example 21 was repeated using the solid product (a) obtained.

(3) Polymerization:

The procedure of Example 21 was repeated using the solid product composition (A) obtained.
The results are as shown in Tables 4 and 6.

Example 25

(1) Preparation of Solid Product (a):

The procedure of Example 21 was repeated except that the rotation rate of the stirring wing was changed to 30 rpm.

(2) Preparation of Solid Catalyst Composition (A):

The procedure of Example 21 was repeated using the solid product (a) obtained.

(3) Polymerization:

The procedure of Example 1 was repeated using the solid product composition (A) obtained.
The results are as shown in Tables 4 and 6.

Example 26

(1) Preparation of Solid Product (a):

The procedure of Example 21 was repeated.

(2) Preparation of Solid Catalyst Composition (A):

Eight (8) liters of hexane containing $Zr(O\text{-}n\text{-}Bu)_4$ and $Ti(O\text{-}n\text{-}Bu)_4$ dissolved in such amount to provide 63 mg (Ti + Zr)/g-catalyst, were added dropwise to 24 liters of hexane slurry containing 1600 g of the solid product (a) obtained with stirring at 20°C over a period of 15 minutes. To this, 14.72 liters of 50 wt.% hexane diluted solution of $EtAlCl_2$ were added dropwise with stirring at 35°C over a period of 120 minutes. Further, the reaction was carried out under refluxing conditions for 120 minutes. After the reaction product was washed with dried hexane until chlorine was not detected in the liquid, the total volume was adjusted to 80 liters by adding hexane.

(3) Polymerization:

A 1-liter autoclave equipped with a stirrer was charged with 400 ml of n-hexane and the temperature was elevated to 80°C. After the inner atmosphere was sufficiently replaced by hydrogen gas, hydrogen was introduced to raise its partial pressure to 2.9 $Kg/cm^2 \cdot G$ and further ethylene was introduced to raise its partial pressure to 5.4 $Kg/cm^2 \cdot G$. To this, the solid catalyst composition (A) comprising 0.010 mmol of Ti obtained in the above Step (2) and 0.50 mmol of triisobutylaluminum were added. While ethylene was supplied to keep a total pressure of 5.4 $Kg/cm^2 \cdot G$, the ethylene polymerization was carried out for one hour.

The results are as shown in Tables 4 and 6.

Example 27

(1) Preparation of Solid Product (a):

A SUS-made reactor equipped with a stirrer (vertical type with four baffles as shown in Table 4), was sufficiently purged with nitrogen, and charged with 31 Kg of ethanol, 0.2 Kg of iodine and 2.2 Kg of metallic magnesium. The reaction was carried out with stirring under refluxing conditions until no hydrogen was evolved any longer to obtain a solid reaction product.

The Fuddler Wing as shown in Fig. 6 (wing diameter: 0.2 m) was used as a stirring wing, and the stirring rotation rate was set at 450 rpm.

The reaction liquid containing the solid product was dried under reduced pressure to obtain a solid product.

(2) Preparation of Solid Catalyst Component (A)

A SUS-made reactor equipped with a stirrer similar to that used in Step (1) was sufficiently purged with nitrogen gas, and charged with 4 Kg of the above-mentioned solid product (a) (not ground) and 20 liters of dehydrated heptane. Under stirring conditions, 0.6 liters of silicon tetrachloride were added. Further, 0.63 liters of diethyl phthalate were added and the temperature was kept at 60°C. After 20 liters of titanium tetrachloride were added, the reaction was carried out at 110°C for 2 hours. The reaction mixture was washed with heptane heated to 80°C. After 25 liters of titanium tetrachloride were further added, the reaction was carried out at 110°C for 2 hours. The reaction product was washed with heptane to obtain a solid catalyst composition (A).

The Max blend wing as shown in Fig. 3 (wing diameter: 0.2 m; H/L = 0.85; Manufactured by Sumitomo Heavy Machinery) was used as a stirring wing, and the stirring rotation rate was set at 130 rpm.

(3) Polymerization

A SUS-maid autoclave (inner volume: 1.0 liter) sufficiently purged with argon gas, was charged with 400 ml of purified heptane, 1 mmol of triethylaluminum, 0.25 mmol of cyclohexylmethyldimethoxysilane and 0.005 mmol, in terms of Ti atom, of the above solid catalyst component (A). Then, hydrogen was added to raise its partial pressure to 0.5 $Kg/cm^2$ and the propylene polymerization was carried out under a total pressure of 8 $Kg/cm^2$ at 70°C for 2 hours.

The results are as shown in Tables 4 and 6.

Example 28

(1) Preparation of Solid Product (a):

The procedure of Example 27 was repeated except that the rotation rate of the stirring wing was changed to 50 rpm.

(2) Preparation of Solid Catalyst Composition (A):

The procedure of Example 27 was repeated using the solid product (a) obtained.

(3) Polymerization:

The procedure of Example 27 was repeated using the solid product composition (A) obtained.
The results are as shown in Tables 4 and 6.

Example 29

(1) Preparation of Solid Product (a):

The procedure of Example 27 was repeated except that the stirring wing was changed to the Paddle Wing 5 as shown in Fig. 5, and the rotation rate of the stirring wing was changed to 200 rpm.

(2) Preparation of Solid Catalyst Composition (A):

The procedure of Example 27 was repeated using the solid product (a) obtained.

(3) Polymerization:

The procedure of Example 27 was repeated using the solid product composition (A) obtained.
The results are as shown in Tables 4 and 6.

Example 30

(1) Preparation of Solid Product (a):

A glass reactor equipped with a stirrer (vertical type with four baffles as shown in Table 4), was sufficiently purged with argon, and charged with 200 g of ethanol, 1.3 g of iodine and 14 g of metallic magnesium. The reaction was carried out with stirring under refluxing conditions until no hydrogen was evolved any longer to obtain a solid reaction product.
The stirring conditions are as shown in Table 4.
The reaction liquid containing the solid product was dried under reduced pressure to obtain a solid product.

(2) Preparation of Solid Catalyst Composition (A):

The procedure of Example 23 was repeated using the solid product (a) obtained.

(3) Polymerization:

The procedure of Example 23 was repeated using the solid product composition (A).
The results are as shown in Tables 4 and 6.

Example 31

(1) Preparation of Solid Product (a):

The procedure of Example 27 was repeated except that 0.082 Kg of magnesium chloride were used instead of 0.2 Kg of iodine.

24

(2) Preparation of Solid Catalyst Composition (A):

The procedure of Example 27 was repeated using the solid product (a) obtained.

(3) Polymerization:

The procedure of Example 27 was repeated using the solid product composition (A) obtained.
The results are as shown in Tables 4 and 6.

Example 32

(1) Preparation of Solid Product (a):

The procedure of Example 27 was repeated.

(2) Preparation of Solid Catalyst Composition (A):

Eight (8) liters of hexane containing $Zr(O\text{-}n\text{-}Bu)_4$ and $Ti(O\text{-}n\text{-}Bu)_4$ dissolved in such amount to provide 63 mg (Ti + Zr)/g-catalyst, were added dropwise to 24 liters of hexane slurry containing 1600 g of the solid product (a) obtained with stirring at 20°C over a period of 15 minutes. To this, 14.72 liters of 50 wt.% hexane diluted solution of $EtAlCl_2$ were added dropwise with stirring at 35°C over a period of 120 minutes. Further, the reaction was carried out under refluxing conditions for 120 minutes. After the reaction product was washed with dried hexane until chlorine was not detected in the liquid, the total volume was adjusted to 80 liters by adding hexane.

(3) Polymerization:

A 1-liter autoclave equipped with a stirrer was charged with 400 ml of n-hexane and the temperature was elevated to 80°C. After the inner atmosphere was sufficiently replaced by hydrogen gas, hydrogen was introduced to raise its partial pressure to 2.9 $Kg/cm^2 \cdot G$ and further ethylene was introduced to raise its partial pressure to 5.4 $Kg/cm^2 \cdot G$. To this, the solid catalyst composition (A) comprising 0.010 mmol of Ti obtained in the above Step (2) and 0.50 mmol of triisobutylaluminum were added. Then, while ethylene was supplied to keep a total pressure to 5.4 $Kg/cm^2 \cdot G$, the ethylene polymerization was carried out for one hour.
The results are as shown in Tables 4 and 6.

Comparative Example 6

(1) Preparation of Solid Product (a):

The procedure of Example 21 was repeated except that the stirring conditions were changed as shown in Table 4.

(2) Preparation of Solid Catalyst Composition (A):

The procedure of Example 21 was repeated except that the stirring conditions were changed as shown in Table 5.

(3) Polymerization:

The procedure of Example 21 was repeated.
The results are as shown in Tables 4 and 6.

Comparative Examples 7 to 9

(1) Preparation of Solid Product (a):

The procedure of Example 21 was repeated.

(2) Preparation of Solid Catalyst Composition (A):

The procedure of Example 21 was repeated except that the stirring conditions were changed as shown in Table 5.

(3) Polymerization:

The procedure of Example 21 was repeated.
The results are as shown in Tables 4 and 6.

Table 4

| | Reactor Volume (ℓ) | Shape of Wing | Wing Diameter d (m) | Vessel Diameter D (m) | Rotation Rate (rpm) | H／L | $n^3 d^2$ | Average Particle Size of(a) ($\mu$m) | S of (a) | P of (a) | Shape of (a) |
|---|---|---|---|---|---|---|---|---|---|---|---|
| Example-21 | 80 | Max Blend Wing | 0.2 | 0.4 | 130 | 0.85 | $8.8\times10^4$ | 58 | 1.19 | 1.6 | Spherical |
| -22 | 80 | Full Zone Wing | 0.2 | 0.4 | 110 | 0.85 | $5.3\times10^4$ | 65 | 1.21 | 1.8 | Spherical |
| -23 | 0.5 | Max Blend Wing | 0.04 | 0.08 | 350 | 0.91 | $6.9\times10^4$ | 55 | 1.21 | 1.6 | Spherical |
| -24 | 80 | Max Blend Wing | 0.2 | 0.4 | 130 | 0.85 | $8.8\times10^4$ | 56 | 1.21 | 1.8 | Spherical |
| -25 | 80 | Max Blend Wing | 0.2 | 0.4 | 30 | 0.85 | $1.1\times10^3$ | 99 | 1.19 | 1.9 | Spherical |
| -26 | 80 | Max Blend Wing | 0.2 | 0.4 | 130 | 0.85 | $8.8\times10^4$ | 48 | 1.19 | 1.7 | Spherical |
| -27 | 80 | Fuddler Wing | 0.2 | 0.4 | 450 | 0.25 | $3.6\times10^6$ | 31 | 1.20 | 3.6 | Spherical |
| -28 | 80 | Fuddler Wing | 0.2 | 0.4 | 50 | 0.25 | $5.0\times10^3$ | 96 | 1.19 | 4.3 | Spherical |
| -29 | 80 | Paddle Wing | 0.2 | 0.4 | 200 | 0.21 | $3.2\times10^5$ | 58 | 1.19 | 4.6 | Spherical |
| -30 | 0.5 | Fuddler Wing | 0.04 | 0.08 | 600 | 0.25 | $3.5\times10^5$ | 55 | 1.21 | 3.5 | Spherical |
| -31 | 80 | Fuddler Wing | 0.2 | 0.4 | 450 | 0.25 | $3.6\times10^6$ | 42 | 1.22 | 3.4 | Spherical |
| -32 | 80 | Fuddler Wing | 0.2 | 0.4 | 450 | 0.25 | $3.6\times10^6$ | 29 | 1.21 | 3.3 | Spherical |
| Comp.Example-6 | 80 | Fuddler Wing | 0.2 | 0.4 | 40 | 0.25 | $2.6\times10^3$ | 360 | 2.20 | 9.2 | Amorphous |
| -7 | 80 | Max Blend Wing | 0.2 | 0.4 | 130 | 0.85 | $8.8\times10^4$ | 58 | 1.19 | 1.6 | Spherical |
| -8 | 80 | Max Blend Wing | 0.2 | 0.4 | 130 | 0.85 | $8.8\times10^4$ | 58 | 1.19 | 1.6 | Spherical |
| -9 | 80 | Max Blend Wing | 0.2 | 0.4 | 130 | 0.85 | $8.8\times10^4$ | 58 | 1.19 | 1.6 | Spherical |

Table 5

| | Reactor Volume (ℓ) | Shape of Wing | Wing Diameter d (m) | Vessel Diameter D (m) | Rotation Rate (rpm) | $n^3 d^2$ | H/L |
|---|---|---|---|---|---|---|---|
| Comp.Example-6 | 80 | Fuddler Wing | 0.2 | 0.4 | 40 | $2.6 \times 10^6$ | 0.25 |
| -7 | 80 | Fuddler Wing | 0.2 | 0.4 | 40 | $2.6 \times 10^6$ | 0.25 |
| -8 | 80 | Fuddler Wing | 0.2 | 0.4 | 130 | $8.8 \times 10^4$ | 0.25 |
| -9 | 80 | Fuddler Wing | 0.2 | 0.4 | 500 | $2.6 \times 10^6$ | 0.25 |

Table 6

| | Amount of Ti carried in (a) (ngTi/g-cat) | Catalytic activity (Kg/gTi-2hr) | Stereo-regularity (I.I)(wt%) | Powder Bulk Density (g/cc) | Amount of routh/micro-powders | | Shape of Powders | S of Powders | P of Powders |
|---|---|---|---|---|---|---|---|---|---|
| | | | | | less than 250 μm | more than 2830 μm | | | |
| Example-21 | 31 | 613 | 98.1 | 0.44 | 0.01 | 0 | Spherical | 1.21 | 1.6 |
| -22 | 30 | 584 | 98.5 | 0.45 | 0.01 | 0 | Spherical | 1.22 | 1.7 |
| -23 | 33 | 545 | 98.6 | 0.45 | 0.01 | 0 | Spherical | 1.17 | 1.6 |
| -24 | 32 | 532 | 98.5 | 0.44 | 0.01 | 0 | Spherical | 1.17 | 1.7 |
| -25 | 31 | 590 | 98.6 | 0.44 | 0 | 0.01 | Spherical | 1.20 | 1.8 |
| -26 | 30 | 512 | 98.5 | 0.45 | 0.01 | 0 | Spherical | 1.19 | 1.6 |
| -27 | 32 | 638 | 98.1 | 0.44 | 13.5 | 0 | Spherical | 1.24 | 3.7 |
| -28 | 31 | 532 | 98.4 | 0.43 | 0.2 | 4.4 | Spherical | 1.17 | 3.5 |
| -29 | 31 | 592 | 98.8 | 0.45 | 3.5 | 0.3 | Spherical | 1.21 | 3.6 |
| -30 | 33 | 515 | 98.7 | 0.45 | 2.2 | 0.2 | Spherical | 1.27 | 3.2 |
| -31 | 32 | 621 | 98.3 | 0.45 | 15.3 | 0 | Spherical | 1.22 | 3.7 |
| -32 | 32 | 629 | 98.2 | 0.42 | 16.7 | 0 | Spherical | 1.23 | 3.1 |
| Comp.Example-6 | Uncontrollable Reaction took place due to poor mixing caused by generation of agglomerates. | | | | | | | | |
| -7 | Uncontrollable Reaction took place due to poor mixing caused by generation of agglomerates. | | | | | | | | |
| -8 | 32 | 527 | 98.6 | 0.42 | 3.6 | 1.3 | Spherical | 1.28 | 6.1 |
| -9 | 31 | 530 | 98.5 | 0.41 | 45.2 | 0.1 | Amorphons | 1.35 | 15.2 |

Example 33

(1) Preparation of Solid Product (a):

A SUS-made reactor (inner volume: 80 liters) equipped with a stirrer, was sufficiently purged with nitrogen, and charged with 31 Kg of ethanol, 0.2 Kg of iodine and 2.2 Kg of metallic magnesium. The reaction was carried out with stirring under refluxing conditions until no hydrogen was evolved any longer to obtain a solid reaction product.
The reaction liquid containing the solid product was dried under reduced pressure to obtain a solid product.

(2) Preparation of Solid Catalyst Component (A)

A SUS-made reactor equipped with a stirrer similar to that used in Step (1) was sufficiently purged with nitrogen gas, and charged with 4 Kg of the above-mentioned solid product (a) (not ground) and 20 liters of dehydrated heptane. Under stirring conditions, 0.6 liters of silicon tetrachloride were added. Further, 0.63 liters of diethyl phthalate were added and the temperature was kept at 60°C. After 20 liters of titanium tetrachloride were added, the reaction was carried out at 110°C for 2 hours. The reaction mixture was washed with heptane heated to 80°C. After 25 liters of titanium tetrachloride were further added, the reaction was carried out at 110°C for 2 hours. The reaction product was washed with heptane to obtain a solid catalyst composition (A).

(3) Pre-Polymerization

A SUS-maid reactor (vertical type with four baffles as shown in Table 7) equipped with a stirrer, was sufficiently purged with nitrogen gas, and charged with 40 liters of purified heptane, 2.6 ml of triethylaluminum and 2.7 mol, in terms of Ti atom, of the above solid catalyst component (A). After the reaction mixture was kept at 110°C for 2 hours, the obtained product was washed with heptane to obtain a solid catalyst component (A). In this case, propylene was continuously supplied to keep a total pressure of 0.8 Kg/cm$^2$·G.
The Max blend wing as shown in Fig. 3 (as shown in Table 7; Manufactured by Sumitomo Heavy Machinery) was used as a stirring wing, and the stirring rotation rate was set at 130 rpm.

(4) Polymerization

A SUS-maid autoclave (inner volume: 1.0 liter) sufficiently purged with argon gas, was charged with 400 ml of purified heptane, 1 mmol of triethylaluminum, 0.25 mmol of cyclohexylmethyldimethoxysilane and 0.005 mmol, in terms of Ti atom, of the above solid catalyst component (A). Then, hydrogen was added to raise its partial pressure to 0.5 Kg/cm$^2$ and the propylene polymerization was carried out under a total pressure of 8 Kg/cm$^2$ at 70°C for 2 hours.
The results are as shown in Tables 7 and 8.
In addition, "Stereo-regularity" used in the Table means an insoluble fraction extracted from boiling heptane for 6 hours.

Example 34

(1) Preparation of Solid Product (a):

The procedure of Example 33 (1) was repeated.

(2) Preparation of Solid Catalyst Component (A):

The procedure of Example 33 (2) was repeated.

(3) Pre-Polymerization:

The procedure of Example 33 (3) was repeated except that the stirring wing was changed to the Full-Zone Wing as shown in Fig. 4 (Manufactured by Shinko PanTec), and the rotation rate of the stirring wing was changed to 300 rpm.

(4) Polymerization:

The procedure of Example 33 (4) was repeated.
The results are as shown in Tables 7 and 8.

Example 35

(1) Preparation of Solid Product (a):

The procedure of Example 33 (1) was repeated.

(2) Preparation of Solid Catalyst Component (A):

The procedure of Example 33 (2) was repeated.

(3) Pre-Polymerization:

The procedure of Example 33 (3) was repeated except that the slurry concentration was changed to 450g/l, and the propylene partial pressure was changed to 3.8 Kg/cm$^2$·G.

(4) Polymerization:

The procedure of Example 33 (4) was repeated.
The results are as shown in Tables 7 and 8.

Example 36

(1) Preparation of Solid Product (a):

The procedure of Example 33 (1) was repeated.

(2) Preparation of Solid Catalyst Component (A):

The procedure of Example 33 (2) was repeated.

(3) Pre-Polymerization:

The procedure of Example 33 (3) was repeated except that the slurry concentration was changed to 300g/l, the propylene partial pressure was changed to 3.8 Kg/cm$^2$·G, the rotation rate of the stirring wing was changed to 40 rpm, and the temperature was changed to 20°C.

(4) Polymerization:

The procedure of Example 33 (4) was repeated.
The results are as shown in Tables 7 and 8.

Comparative Example 10

(1) Preparation of Solid Product (a):

The procedure of Example 33 (1) was repeated.

(2) Preparation of Solid Catalyst Component (A):

The procedure of Example 33 (2) was repeated.

(3) Pre-Polymerization:

The procedure of Example 33 (3) was repeated except that the stirring wing was changed to the Paddle Wing 5.

(4) Polymerization:

The procedure of Example 33 (4) was repeated.

The results are as shown in Tables 7 and 8.

Comparative Example 11

(1) Preparation of Solid Product (a):

The procedure of Example 33 (1) was repeated.

(2) Preparation of Solid Catalyst Component (A):

The procedure of Example 33 (2) was repeated.

(3) Pre-Polymerization:

The procedure of Comparative Example 10 (3) was repeated except that the slurry concentration was increased to 300 g/l in the pre-polymerization. As a result, uncontrollable reaction took place and the temperature was increased without control, to give agglomerates. 0.5 hour later, the temperature was decreased to 110°C and the pre-polymerization treatment was terminated.

(4) Polymerization:

The procedure of Example 33 (4) was repeated.
The results are as shown in Tables 7 and 8. In this Example, as a result of polymerization, the catalyst activities and the stereo-regularity were extremely lowered. The bulk density was also drastically decreased.

Comparative Example 12

(1) Preparation of Solid Product (a):

The procedure of Example 33 (1) was repeated.

(2) Preparation of Solid Catalyst Component (A):

The procedure of Example 33 (2) was repeated.

(3) Pre-Polymerization:

The procedure of Example 33 (3) was repeated except that the stirring wing was changed to the Fuddler Wing 4, and the polymerization time was extended to 25 hours.

(4) Polymerization:

The procedure of Example 33 (4) was repeated.
The results are as shown in Tables 7 and 8. In this Example, as a result of polymerization, the catalyst activities were extremely lowered although the amount of the pre-polymerization was about the same as that obtained in Example 1 (3).

Industrial Applicability

As mentioned above, the present invention is useful in the production of polyolefins, particularly ethylene polymers.

Table 7

| | Reactor Volume (ℓ) | Shape of Wing | Wing Diameter d (m) | Vessel Diameter D (m) | Rotation Rate (rpm) | H/L | Slurry Concentration (g/l) | Temp. (°C) | Pressure (Kg/cm²G) | Time (hr) |
|---|---|---|---|---|---|---|---|---|---|---|
| Example-33 | 80 | Max Blend Wing | 0.2 | 0.4 | 130 | 0.85 | 100 | 30 | 0.8 | 5.0 |
| -34 | 80 | Full Zone Wing | 0.2 | 0.4 | 300 | 0.85 | 100 | 60 | 0.8 | 5.0 |
| -35 | 80 | Max Blend Wing | 0.2 | 0.4 | 130 | 0.85 | 450 | 30 | 3.8 | 5.0 |
| -36 | 80 | Max Blend Wing | 0.2 | 0.4 | 40 | 0.85 | 300 | 20 | 2.3 | 5.0 |
| Comp.Example-10 | 80 | Paddle Wing | 0.2 | 0.4 | 130 | 0.21 | 100 | 30 | 0.8 | 5.0 |
| -11 | 80 | Paddle Wing | 0.2 | 0.4 | 130 | 0.21 | 300 | 30~100 | 0.8 | 6.5 |
| -12 | 80 | Fuddler Wing | 0.2 | 0.4 | 130 | 0.25 | 100 | 30 | 0.8 | 25.0 |

Table 8

| | Amount of Pre-Polymerization (g/g-cat) | Catalytic Activity (Kg/gTi-2hr) | Stereo-regularity (I.I) (wt%) | Powder Bulk Density (g/cc) |
|---|---|---|---|---|
| Example-33 | 2.09 | 609 | 98.6 | 0.43 |
| -34 | 2.24 | 593 | 98.5 | 0.45 |
| -35 | 2.21 | 554 | 98.6 | 0.44 |
| -36 | 2.00 | 599 | 98.5 | 0.44 |
| Comp.Example-10 | 0.41 | 543 | 98.7 | 0.42 |
| -11 | 1.25 | 139 | 90.6 | 0.23 |
| -12 | 2.01 | 216 | 98.5 | 0.43 |

## Claims

1. A process for producing an ethylene polymer,
   characterized by performing homopolymerization of ethylene or copolymerization of ethylene and another alpha-olefin using at least the following compounds (A) and (B):

   (A) a solid catalyst component prepared from at least (a) a solid product obtained by the reaction of metallic magnesium, alcohol and at least 0.0001 gram-atom per 1 gram-atom of the metallic magnesium of halogen, or a halogen-containing compound containing at least 0.0001 gram-atom per 1 gram-atom of the metallic magnesium of a halogen atom, and (b) a titanium compound; and

   (B) an organometallic compound,

   wherein the solid catalyst component (A) has been contacted with a small amount of olefin to form 0.1 to 100 grams, per 1 gram of the solid catalyst component (A), of an olefin polymer, and then contacted with at least one kind of gas selected from carbon monoxide and carbon dioxide, or a mixed gas of such gases and an inert gas.

2. A process according to claim 1, characterized in that said preparation of compound (A) from components (a) and (b) being carried out by

(1) introducing (a) and (b) together with an inert hydrocarbon solvent into a stirring vessel which has a stirring wing comprising a bottom paddle wing and an upper wing, and

(2) stirring the mixture under the condition that the stirring wing satisfies the following equations (I) and (II):

$$H/L > 0.5 \qquad\qquad (I)$$

wherein H is height between the bottom of the vessel and the most upper portion of the upper wing and L is liquid level during the reaction, and

$$4.3 \times 10^3 < n^3 d^2 < 4.0 \times 10^6 \qquad\qquad (II)$$

wherein d(m) is a diameter of the stirring wing and n(rpm) is rotation rate.

**Patentansprüche**

1. Verfahren zur Herstellung eines Ethylen-Polymers, gekennzeichnet durch die Durchführung einer Homopolymerisation von Ethylen oder einer Copolymerisation von Ethylen und einem anderen Alpha-Olefin, wobei mindestens die folgenden beiden Komponenten (A) und (B) verwendet werden:

(A) Eine feste Katalysatorkomponente, hergestellt aus mindestens (a) einem festen Produkt, erhalten durch die Reaktion von metallischem Magnesium, Alkohol und mindestens 0,0001 Gramm-Atom Halogen pro 1 Gramm-Atom des metallischen Magnesiums, oder einer Halogen enthaltenden Verbindung, welche mindestens 0,0001 Gramm-Atome an Halogen-Atomen pro 1-Gramm-Atom des metallischen Magnesiums enthält, und (b) einer Titan-Verbindung; und

(B) einer organometallischen Verbindung,

worin die feste Katalysatorkomponente (A) mit einer geringen Menge an Olefin kontaktiert wurde, um 0,1 bis 100 Gramm pro 1 Gramm der festen Katalysatorkomponente (A) an einem Olefin-Polymer zu bilden und worin dann mit mindestens 1 Typ Gas, ausgewählt aus Kohlenmonoxyd und Kohlendioxyd oder einem gemischten Gas aus solchen Gasen und einem Inertgas, in Kontakt gebracht wird.

2. Verfahren nach Anspruch 1, dadurch gekennzeichnet, daß die Herstellung der Verbindung (A) aus den Komponenten (a) und (b) durchgeführt wird durch:

(1) Einführen von (a) und (b) zusammen mit einem inerten Kohlenwasserstofflösemittel in einen Rührkessel, welcher einen Rührflügel aufweist, welcher einen Bodenschaufelflügel und einen oberen Flügel aufweist, und

(2) Rühren der Mischung unter der Bedingung, daß der Rührflügel die folgenden Gleichungen (I) und (II) erfüllt:

$$H/L > 0.5 \qquad\qquad (I)$$

worin H die Höhe zwischen dem Boden des Kessels und dem obersten Teil des oberen Flügels darstellt und worin L das Flüssigkeitsniveau während der Reaktion darstellt, und

$$4,3 \times 10^3 < n^3 d^2 < 4,0 \times 10^6 \qquad\qquad (II)$$

worin d(m) ein Durchmesser des Rührflügels ist und n(rpm) die Drehgeschwindigkeit ist.

**Revendications**

1. Procédé de production d'un polymère d'éthylène, caractérisé par la réalisation d'une homopolymérisation d'éthylène ou d'une copolymérisation d'éthylène et d'une autre alpha-oléfine en utilisant au moins les composés (A) et (B) suivants :

    (A) un composant de catalyseur solide préparé à partir d'au moins (a) un produit solide obtenu par la réaction de magnésium métallique, d'alcool et d'au moins 0,0001 atome-gramme, pour 1 atome-gramme du magnésium métallique, d'halogène ou d'un composé contenant de l'halogène contenant au moins 0,0001 atome-gramme, pour 1 atome-gramme du magnésium métallique, d'un atome d'halogène, et (b) d'un composé de titane; et
    (B) un composé organométallique,

    dans lequel le composant de catalyseur solide (A) a été mis en contact avec une petite quantité d'oléfine pour former 0,1 à 100 g, pour 1 g du composant de catalyseur solide (A), d'un polymère d'oléfine, et ensuite mis en contact avec au moins un type de gaz choisi parmi le monoxyde de carbone et le dioxyde de carbone ou un gaz mixte d'un tel gaz et d'un gaz inerte.

2. Procédé suivant la revendication 1, caractérisé en ce que la préparation du composé (A) à partir des composants (a) et (b) est réalisée

    (1) en introduisant (a) et (b) ensemble avec un solvant hydrocarboné inerte dans un récipient d'agitation qui comporte une ailette d'agitation comprenant une ailette en forme de palette inférieure et une ailette supérieure, et
    (2) en agitant le mélange sous des conditions telles que l'ailette d'agitation satisfasse aux équations (I) et (II) suivantes :

$$H/L > 0,5 \qquad\qquad\qquad (I)$$

    où H est la hauteur entre le fond du récipient et la partie supérieure de l'ailette supérieure et L est le niveau de liquide au cours de la réaction, et

$$4,3 \times 10^3 < n^3 d^2 < 4,0 \times 10^6 \qquad\qquad\qquad (II)$$

    où d(m) est le diamètre de l'ailette d'agitation et n(tpm) est la vitesse de rotation.

**Fig. 1**

(A) Transition Metal Component

- Ti Compound
- Metallic Mg
- Halogen, Halogen-Containing Compound
- Alcohol
- (Electron Donor Compound)

(B) Organometallic Component

- Organometallic Compound

(C) Third Component

- (Electron Donor Compound)

Gas Phase Polymerization

Ethylene

Fig. 2

EP 0 544 919 B1

(A) Transition Metal Component

Ti Compound

Metallic Mg

Halogen, Halogen-Containing Compound

Alcohol

(Electron Donor Compound)

Pre-Polymerization + $CO_2$ and/or CO

(B) Organometallic Component

Organometallic Compound

Ethylene

(C) Third Component

(Electron Donor Compound)

**Fig. 3**

**Fig. 4**

Fig. 5

(a)

(b)

Fig. 6